# EUROPEAN PATENT SPECIFICATION

(11) **EP 2 373 721 B1**
(45) Date of publication and mention of the grant of the patent: **25.06.2014**
(21) Application number: 09796731.9
(22) Date of filing: 22.12.2009
(51) Int. Cl.: C08G 65/00

(54) **ACETYLENIC AROMATIC POLYETHERKETONE**
ACETYLENISCHES AROMATISCHES POLYETHERKETON
POLYÉTHERCÉTONE AROMATIQUE ACÉTYLÉNIQUE

(30) Priority: 22.12.2008 SE 0802639; 02.03.2009 WO PCT/SE2009/000112
(43) Date of publication of application: 12.10.2011
(73) Proprietor: Nexam Chemical AB, 223 81 Lund (SE)
(72) Inventor: ROSENBERG, Jan-Erik, S-311 41 Falkenberg (SE); PERSSON, David, S-217 51 Malmö (SE); RÖME, Daniel, S-211 50 Malmö (SE)
(74) Representative: Ström & Gulliksson AB
(86) International application number: PCT/EP2009/067746
(87) International publication number: WO 2010/072760

(56) References cited:
- WO-A-2005/014693
- US-A1- 2008 175 139

## Description

### Field of the invention

The present invention refers acetylenic aromatic polyethers. Especially, it refers to acetylenic aromatic polyetherketones (PAEK), such as acetylenic polyetheretherketone (acetylenic PEEK). Such acetylenic aromatic polyethers are obtainable by incorporation of at least one acetylenic compound, i.e. a compound having at least one carbon-carbon triple bond, as endcapping group, as pendant group and/or as group inside the polymer chain, in said aromatic polyether. In a further aspect the present invention refers to a composition comprising said acetylenic aromatic polyether. In yet further aspects the present invention refers to a moulded article comprising said acetylenic aromatic polyether or said composition. The polyether in said moulded article is preferably cross-linked.

### Background

Polyimides are polymers comprising imid bonds. They are typically synthesized by condensation of carboxylic acid anhydride monomers, such as pyromellitic dianhydride, with diamine monomers, such as 4,4'-oxydianiline. Polyimides obtained via condensation of pyromellitic dianhydride and 4,4'-oxydianiline are sold under the trademarks Vespel and Meldin. Polyimide materials are lightweight, flexible, resistant to heat and chemicals.

Further, thermoset polyimides have inherent good properties, such as wear and friction properties, good electrical properties, radiation resistance, good cryogenic temperature stability and good flame retardant properties. Therefore, they are used in the electronics industry for flexible cables, as an insulating film on magnet wire and for medical tubing. The polyimide materials is also used in high or low temperature exposed applications as structural parts were the good temperature properties is a prerequisite for the function.

However, the complicated processing is required to shape a part of a thermoset polyimide, as the cure behavior involves molecular growth via polymerization, and as the growth reaction is a condensation with elimination of water. Further, water, or humidity, is acting as a plasticizer for polyimides and lowers the glass temperature as well as the temperature and chemical resistance. Thus, properties like wear resistance are decreased.

The processing methods required for traditional polyimide processing into structural parts, i.e. autoclave curing, mechanical shaping or reaction injection moulding into pre-formed fibre reinforcement structures, are tedious and not suited for production of larger series of articles.

US 2008/175139 discloses a composition of matter for a recording medium in atomic force data storage devices. The composition includes one or more poly(aryl ether ketone) copolymers, each of the one or more poly(aryl ether ketone) copolymers including (a) a first monomer including an aryl ether ketone and (b) a second monomer including an aryl ether ketone and a hydrogen bonding cross-linking moiety, the moiety capable of forming two or more hydrogen bonds at room temperature, each of the one or more poly(aryl ether ketone) copolymers having two terminal ends, each terminal end having a phenylethynyl moiety. The covalent and hydrogen bonding cross-linking of the poly(aryl ether ketone) oligomers may be tuned to match thermal and force parameters required in read-write-erase cycles.

WO 2005/014693 discloses a method of manufacturing an intrinsically conductive polymer crosslinking at least a portion of an intrinsically conductive polymer precursor in the solid state, the swollen state, or combinations comprising at least one of the foregoing states, wherein the swollen state is characterized as being one wherein the intrinsically conductive polymer precursor increases in volume upon exposure to a solvent without completely dissolving in the solvent

Accordingly, there is a need for a material which may be used in applications wherein polyimides typically are used today, but which material is easier to process.

### Summary

Accordingly, the present invention preferably seeks to mitigate, alleviate, eliminate or circumvent one or more of the above-identified deficiencies in the art and disadvantages singly or in any combination and solves at least the above mentioned problems by providing a cross-linkable aromatic polyetherketone comprising at least two residues, each comprising one acetylenic carbon-carbon triple bond wherein
one of said two residues is present in said polyetherketone as a pendant group or as a residue, wherein the carbon-carbon triple bond is part of the polymer chain;
the other one of said two residues is present in said polyetherketone as an end-capping group;
said cross-linkable aromatic polyetherketone is obtainable by co-polymerizating at least two aromatic monomers, giving rise to an ether bond and/or ketone linkage upon polymerization, and at least two acetylenic compounds, or by subjecting at least one aromatic polyetherketone to react with at least two acetylenic compounds; and
said two acetylenic compounds are independently selected from compounds according to formula II 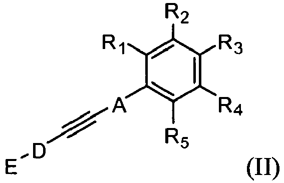 wherein
R1 and R5 are independently selected from the group consisting of hydrogen, halogen, hydroxy, acyl halide, nitro, C1-C4 alkyl, CF3 and a residue according to formula (III);
R2 to R4 are independently selected from the group consisting of hydrogen, halogen, hydroxy, acyl halide, nitro and a residue according to formula (III);
"A" is a direct bond, an electron donating, linking group, such as methylene, or an ether (-O-) bond, or an electron withdrawing, linking group, such as a carbonyl linkage (-C(O)-);
"D" is a direct bond, an electron donating, linking group, such as methylene, or an ether (-O-) bond, or an electron withdrawing, linking group, such as a carbonyl linkage (-C(O)-);
"E" is selected from the group consisting of hydrogen, C1-4 alkyl, and a residue according to formula (IV);
Formula (III) is a residue as depicted below 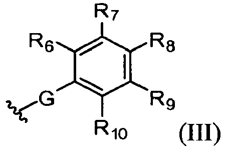 wherein
R6 to R10 are independently selected from the group consisting of hydrogen, halogen, hydroxy, nitro, and acyl halide,;
"G" is a direct bond, an electron donating, linking group, such as methylene, or an ether (-O-) bond, or an electron withdrawing, linking group, such as a carbonyl linkage (-C(O)-); and
the waved line indicates the point of attachment;
Formula (IV) is a residue as depicted below 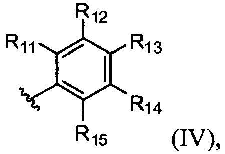 wherein
R11 and R15 are independently selected from the group consisting of hydrogen, halogen, hydroxy, acyl halide, nitro, C1-C4 alkyl, CF3 and a residue according to formula (V);
R12 to R14 are independently selected from the group consisting of hydrogen, halogen, hydroxy, acyl halide, nitro, and a residue according to formula (V); and the waved line indicates the point of attachment;
Formula (V) is a residue as depicted below 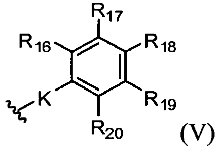 wherein
R16 to R20 are independently selected from the group consisting of hydrogen, halogen, hydroxy, nitro, and acyl halide;
"K" is a direct bond, an electron donating, linking group, such as methylene, or an ether (-O-) bond, or an electron withdrawing, linking group, such as a carbonyl linkage (-C(O)-); and
the waved line indicates the point of attachment.

Another aspect of the invention relates to a cross-linked aromatic polyetherketone, which may be obtained by cross-linking such a cross-linkable aromatic polyetherketone.

Another aspect of the invention relates to a composition comprising at least one cross-linkable aromatic polyetherketone, wherein said composition comprises between 0.1 and 99.9 wt% of said cross-linkable aromatic polyetherketone, at least one additional polymer, and/or at least one filler, reinforcement, pigment, plasticiser and/or any other additive.

Another aspect of the invention relates to an article obtainable by shaping a cross-linkable aromatic polyetherketone or a composition comprising at least one cross-linkable aromatic polyetherketone.

Further advantageous features of the invention are defined in the dependent claims and with regard to embodiments disclosed herein

### Description of embodiments

Aromatic polyetherketones (also known as PAEK-polymers or just PAEK) have excellent physical and chemical properties and may replace polyimides in various applications. Such applications include applications wherein the polymer is to be exposed to humidity. Further, other such applications are applications requiring larger production volumes, applications requiring injection molding with low tolerance as a production method and applications wherein flame retardant properties are important.

However, PAEK-polymers, has a tendency to not resist creep deformation at elevated temperatures, partly because of its low Tg. Also, the Coefficient of Thermal Expansion (CTE) may be considered as a limitation in applications within the electronic segment.

Accordingly, there are, despite the fact that aromatic polyetherketones have excellent physical and chemical properties and for a long time have been widely used for resins, films, fibres, and moulded articles, demands for PAEK with improved and/or modified properties, such as increased operational temperatures and retained properties during and after exposure to for instance harsh temperature, atmosphere, mechanical and radiation conditions.

One important factor in respect to this is the glass transition temperature (Tg). Tg for aromatic polyetherketones, such as poly ether ether ketone (also known as PEEK), is typically about 140°C. This is too low for the polymer to be used in high temperature applications, such as in airplanes and aerospace applications, wherein polyimides are used today.

Accordingly aromatic polyetherketones are not suitable as a replacement material for polyimides in all applications. In order to replace polyimides in high temperature applications, such as in airplanes and aerospace applications, T_{g} of the polymer has to be increased in order to enhance properties dependent of Tg, such as heat deflection temperature and thermal resistance. Further, the degree of plastic deformation (creep behavior) has to be minimized as well an increase of chemical resistance at high temperatures is required. Furthermore, good wear properties as well as electrical properties need to be enhanced together without affecting the processing properties to allow for injection moulding. Possibilities to enhance the processing properties by reducing melt viscosity would in some cases extend the potential use in several more applications, such as in the electronic and electrical areas.

It has now unexpectedly been found that cross-linkable aromatic polyetherketones may be obtained by incorporation of acetylenic residues comprising carbon-carbon triple bonds, for instance as endcapping residue(s), as pendant residue(s) along the molecular backbone and/or as residue(s), wherein the carbon-carbon triple bond(s) is part of the polymer chain, in aromatic polyetherketones.

The carbon-carbon triple bond allows for cross-linking, such as acetylenic cross-linking, of the cross-linkable aromatic polyetherketone, as alternative and/or additional cross-linking mechanism, thus implying that improved and/or changed properties, such as changed E-module value, changed impact strength and improved resistance towards thermo-oxidative, thermal, oxidative and/or mechanical degradation may be achieved. Also the T_{g} may be affected by such cross-linking.

The acetylenic residues were found to be compatible with normal thermoplastic processing methods. Thus, cross-linkable aromatic polyetherketones may be processed using normal thermoplastic processing methods, before cross-linking is initiated. Further, a by-product free (contamination free) material may be obtained. In addition, the T_{g} (glass transition temperature) may be increased to such a level that the cross-linked polymer may be used in high temperature applications without traditional thermoplastic drawbacks jeopardizing the application performance. Furthermore, the cross-linking enhances the already good wear resistance of PAEK. Thus, for cross-linkable aromatic polyetherketone may be used in primary structures in aerospace applications were extraordinary level of thermal resistance is required.

Further, cross-linked aromatic polyetherketone may replace polyimides in high temperature applications, such as in airplanes, aerospace and other structural applications were good temperature and creep properties are required.

Also, metal-replacement in applications where light weight and big volume production are required would become possible. Applications where wear and low friction is necessary would be another target where polyimides may be replaced, especially if it comes to applications that are subjected to low cost high volume requirement because exchange will be done periodically. Applications with demands on being exposed to a high heat in a humid environment and where low creep is a demand would be typically applications for this cross-linked PAEK material, especially if there is a demand on high volume production availability for the material used in order to minimize tolerance deviations high production costs.

Additionally, cross-linkable aromatic polyetherketones are, compared to polyimides, easy to process because of their inherent thermoplastic properties, which are kept during the whole production process until the last step when the polymer is cured, i.e. cross-linked. Curing is heat activated and will not start until the cross-linkable polymer is heated up to a temperature above the normal melting and processing temperature. Thus, cross-linkable aromatic polyetherketons are suitable for injection molding, compression molding or any other well known process that are based on a non-Newtonian behavior of a melted polymer.

Accordingly, cross-linkable aromatic polyetherketons are suitable alternatives to polyimides overcoming several of the drawbacks associated with polyimides.

An embodiment of the present invention thus refers to a cross-linkable aromatic polyetherketone comprising at least one residue comprising one acetylenic carbon-carbon triple bond.

Such cross-linkable aromatic polyetherketones, having at least one acetylenic carbon-carbon triple bond, are obtainable by subjecting at least two aromatic monomers, giving rise to an ether bond and/or keton linkage upon polymerization, such as 4,4'-dihalobenzophenone, such as 4,4'-difluorobenzophenone, 4,4'-dihydroxybenzophenone, hydroquinone, resorcinol, diphenylether, 1,4-diphenoxybenzene, 1,3-diphenoxybenzene, terephthalolyl chloride, isophthalolyl chloride, or derivatives and analogues thereof, and at least one acetylenic compound, comprising said at least one carbon-carbon triple bond, to co-polymerisation or by subjecting at least one aromatic polyetherketone to reaction with at least one acetylenic compound, having said at least one carbon-carbon triple bond. Said cross-linkable aromatic polyetherketone accordingly comprises at least one carbon-carbon triple bond, as endcapping group, as pendant group and/or as group inside the polymer chain.

Preferred aromatic monomers for the synthesis of cross-linkable aromatic polyetherketones includes 4,4'-difluorobenzophenone, 4,4'-dihydroxybenzophenone, hydroquinone, and resorcinol.

Acetylenic compound refers to any compound, including monomers, oligomers and polymers, and/or any chemical group, which compound or group comprises at least one carbon-carbon triple bond. Preferably, acetylenic compound refers to a monomer.

Endcapping group above and hereafter refers to a group or residue ending a polymer chain. An endcapping acetylenic compound is a monofunctional compound acting chain terminating upon polymerization.

Pendant group above and hereafter refers to a residue present within the polymer chain as a monomer. Poly-4-etynyl-phenylalanin is an example of a polymer having an acetylenic compound incorporated as a pendant group. A pendant compound is a bifunctional compound acting chain propagating upon polymerization.

Inside the polymer chain, when used with respect to the incorporation of the acetylenic compound, above and hereafter refers to a polymer chain, wherein the acetylenic compound has been incorporated such that a triple bond links different parts of the polymer main chain together. As an example, a polymer chain comprising a 4,4'-etyn-1,2-yl-(1,1'-biphenyl) moiety, would have the acetylenic compound inside the polymer chain.

Having the cross-linking group as an endcapping group, will affect the inherent stability of the polymer chain to a limited extent, as the linear polymer chain not is interrupted by any group distinct the from monomer residues. However, each polymer chain may only comprise two cross-linking sites unless the chain is branched.

On the contrary, by use of polymer chain having the cross-linking group as a pendant group, the polymer chain may comprise more than two cross-linking sites without the chain having to be branched. Further, other regions than the ends of the polymer chain may be cross-linked.

By putting the cross-linkable sites in the main chain, the curing temperature is increased and thereby the glass temperature. The material will show even less creep behavior and the thermal stability will also be increased. Further, an increased curing temperature allows for processing at elevated temperatures without initiating curing.

When used herein "acetylenic residue " or "residue comprising at least one carbon-carbon triple bond" is intended to mean a compound comprising at least one carbon-carbon triple bond, which by reaction has been incorporated into an aromatic polyetherketone, for instance as endcapping group, as pendant group along the molecular backbone and/or as group wherein the carbon-carbon triple bond is part of the polymer chain. Similarly, acetylenic compound is intended to mean a compound comprising at least one carbon-carbon triple bond.

In one embodiment, "poly" when used to describe a polymer, such as cross-linkable aromatic polyetherketones, is intended to mean that the polymer comprises more than 10 repeating units, such as more than 15 or 20 repeating units. The number of repeating units in a polymer affects the melting properties of the polymers and may provide the melted polymer with shear-thinning properties. Thus, by having a polymer with more than 10 repeating units, such as more than 15 or 20 repeating units, a polymer suitable for molding, such injection molding, may be obtained.

In an embodiment, wherein at the least one residue comprising at least one carbon-carbon triple bond is present as a pendant group or in chain, poly as used to describe the aromatic etherketone, relates to the total number of repeating units in said polymer, whether or not interrupted by the presence of residue comprising at least one carbon-carbon triple bond in the polymer chain.

In preferred embodiments the compound having at least one acetylenic carbon-carbon triple bond is incorporated into the aromatic polyetherketon by formation of an ether bond or by linking two aromatic rings via a carbonyl. Accordingly, it is preferred if the compound having at least one acetylenic carbon-carbon triple bond comprises at least one aromatic ring, which ring is substituted with fluorine, hydroxyl, haloformyl, such as chloroformyl, and/or nitro. Aromatic rings substituted with fluorine, hydroxyl or nitro may be incorporated into the aromatic polyetherketon by nucleophilic aromatic substitution. Aromatic rings substituted with haloformyl may be incorporated into the aromatic polyetherketon by Friedel-Craft acylation.

Further it is, according to one aspect, preferred if the compound having at least one acetylenic carbon-carbon triple bond comprises a phenylethynyl moiety.

According to one embodiment, aromatic polyetherketones (also denoted polyaryletherketones (PAEK)) as herein disclosed, are polymers wherein the aromatic rings within the polymer chain are exclusively linked by ether bonds and ketone linkages. Preferably, other types of linkages, such as alkylen, such as methylene, sulfon, imid, ester, and amide linkages are not present within the aromatic polyetherketone.

Alkylen, ester, and amide linkages will decrease the thermal stability and the chemical resistance of the polymer. Further such linkages promote thermo oxidative degradation in aggressive environments and thereby shorten the life cycle of the polymer.

Polyethersulfone (PES) is a fully amorphous polymer. This implies that the material comprising PES may be subjected to stress cracking, chemical degradation, and decreased thermal stability. Further, its processability is poor and the sulfone group is largely responsible for the impaired chemical resistance.

Examples of aromatic polyetherketones are polymers such as aromatic poly ether ketone (PEK), aromatic poly ether ether ketone (PEEK), aromatic poly ether ketone ketone (PEKK), and poly ether ketone ether ketone ketone (PEKEKK).

Aromatic polyetherketones are characterized by their thermal and chemical stability and mechanical properties. The aromatic portion of a polymer contributes to the thermal stability and mechanical properties and the ether functionality facilitates processing, but does affect oxidative and thermal stability to a very limited extent.

The cross-linkable aromatic polyetherketone is in an preferred embodiment an acetylenic aromatic poly(ether ketone), an acetylenic aromatic poly(ether ether ketone), an acetylenic aromatic poly(ether ketone ketone), an acetylenic aromatic poly(ether ketone ether ketone), or an acetylenic aromatic poly(ether ketone ether ketone ketone). By acetylenic is implied that, in addition to the monomers used to synthesize aromatic polyetherketone, at least one acetylenic compound have been incorporated into the polymer.

The preferred embodiments of cross-linkable aromatic polyetherketone are acetylenic aromatic poly(ether ether ketone) and acetylenic aromatic poly(ether ketone ketone). In a preferred embodiment the cross-linkable aromatic polyetherketone is such an acetylenic aromatic poly(ether ether ketone), which also may be denoted acetylenic PEEK.

Accordingly, in one embodiment the cross-linkable aromatic polyetherketone may be an aromatic polyetherketone comprising at least one residue comprising at least one carbon-carbon triple bond and in which the structure of the aromatic polyetherketone may be represented by formula (A) 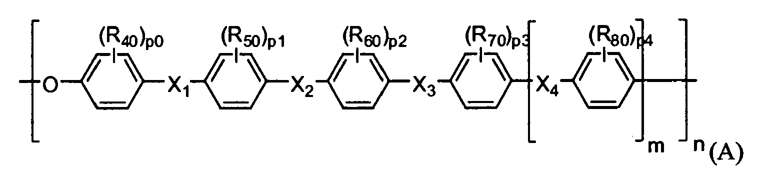 wherein
n is the integer giving the degree of polymerization;
X1 to X4 is "O", i.e. an ether bond, or C(O), i.e. a ketone linkage;
at least one of X1 to X4 is C(O);
m is an integer of 0 (zero), 1 or 2, if m is 0 (zero) then 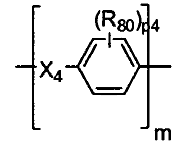 is not present;
p0 to p4 are, independent of each, an integer of 0 (zero), 1 or 2; if the integer is 0 (zero) then the phenyl ring is not substituted;
R40, R50, R60, R70 and R80 are, if present, independently selected from the group consisting of halogen, such as fluorine, chlorine and bromine, C1-C4 alkyl, such as methyl, ethyl, iso-propyl and tert-butyl, OC1-4 alkyl, such as methoxy, nitro, cyano, trifluoromethyl (i.e. CF3), phenyl, phenoxy, and -C(O)Ph.

Using the definitions elaborated above for formula A, certain PAEK:s may be 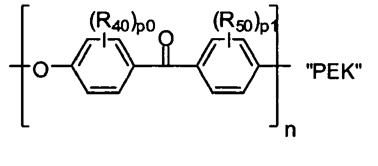 represented by the following formulas,

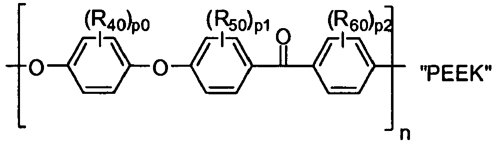

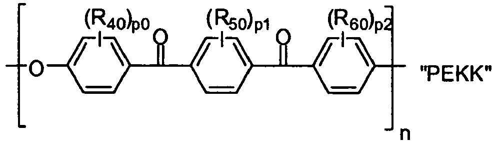

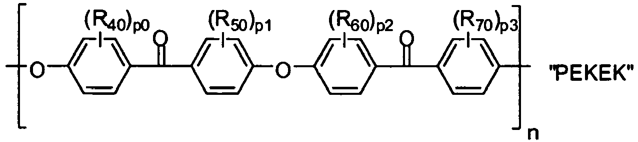

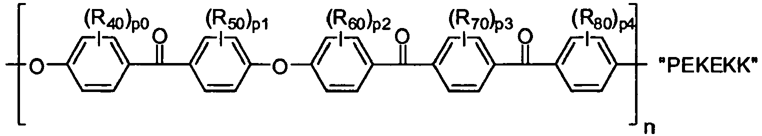

Preferably, p0 to p4 are 0 (zero) in the formulas above and the phenyl rings accordingly thus being unsubstituted. However, as readily understood by the one skilled in the art, R40, R50, R60, R70 and R80 may be a substituent as indicated above.

As the triple bond in the residue comprising at least one carbon-carbon triple bond may be present as a pendant group or even in chain with respect to the polymer chain, cross-linkable aromatic polyetherketone may contain more than one linear segments interrupted by the residue comprising at least one carbon-carbon triple. Such linear segments may be a segment according to formula (A) or any of the formulas given for PEK, PEEK, PEKK, PEKEK, PEKEKK.

According to one preferred embodiment the acetylenic compound may be a compound according to formula II 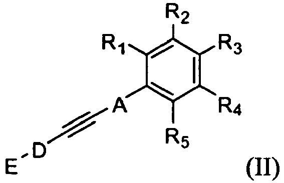 wherein
R1 and R5 are independently selected from the group consisting of hydrogen, halogen, such as fluorine, hydroxy, acyl halide, such as C(O)Cl, nitro, C1-C4 alkyl, such as methyl and tert-butyl, CF3 and a residue according to formula (III);
R2 to R4 are independently selected from the group consisting of hydrogen, halogen, such as fluorine, hydroxy, acyl halide, such as C(O)Cl, nitro and a residue according to formula (III);
"A" is a direct bond, an electron donating, linking group, such as methylene, or an ether (-O-) bond, or an electron withdrawing, linking group, such as a carbonyl linkage (-C(O)-);
"D" is a direct bond, an electron donating, linking group, such as methylene, or an ether (-O-) bond, or an electron withdrawing, linking group, such as a carbonyl linkage (-C(O)-);
"E" is selected from the group consisting of hydrogen, C1-4 alkyl, such as methyl, ethyl and tert-butyl, and a residue according to formula (IV);
Formula (III) is a residue as depicted below 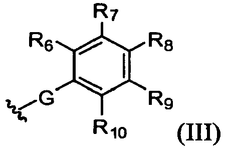 wherein
R6 to R10 are independently selected from the group consisting of hydrogen, halogen, such as fluorine, hydroxy, nitro, and acyl halide, such as C(O)Cl;
"G" is a direct bond, an electron donating, linking group, such as methylene, or an ether (-O-) bond, or an electron withdrawing, linking group, such as a carbonyl linkage (-C(O)-); and
the waved line indicates the point of attachment;
Formula (IV) is a residue as depicted below 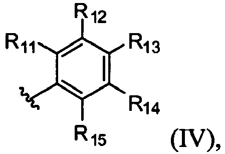 wherein
R11 and R15 are independently selected from the group consisting of hydrogen, halogen, such as fluorine, hydroxy, acyl halide, such as C(O)Cl, nitro, C1-C4 alkyl, such as methyl and tert-butyl, CF3 and a residue according to formula (V);
R12 to R14 are independently selected from the group consisting of hydrogen, halogen, such as fluorine, hydroxy, acyl halide, such as C(O)Cl, nitro, and a residue according to formula (V); and
the waved line indicates the point of attachment;
Formula (V) is a residue as depticted below 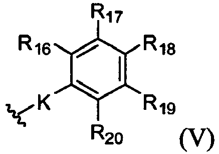 R16 to R20 are independently selected from the group consisting of hydrogen, halogen, such as fluorine, hydroxy, nitro, and acyl halide, such as C(O)Cl;
"K" is a direct bond, an electron donating, linking group, such as methylene, or an ether (-O-) bond, or an electron withdrawing, linking group, such as a carbonyl linkage (-C(O)-); and
the waved line indicates the point of attachment.

According to one embodiment, it is preferred if R1 and R5 in formula II above are independently selected from the group consisting of hydrogen, C1-4 alkyl, such as methyl and tert-butyl, CF3 and residue according to formula (III), wherein R6 to R10 preferably are hydrogen. A group distinct from hydrogen as R1 and/or R5 will constitute a steric hindrance for the curing reaction of the triple-bond. Thus, the curing temperature may be increased if R1 and/or R5 are distinct from hydrogen, especially if "A" is a direct bond. Similarly, it is preferred if R11 and R15, if present, are independently selected from the group consisting of hydrogen, C1-4 alkyl, such as methyl and tert-butyl, CF3 and residue according to formula (V), wherein R16 to R20 preferably are hydrogen. As for R1 and R5, the curing temperature may be increased if R11 and/or R15 are distinct from hydrogen, especially if "D" is a direct bond.

According to another embodiment, it is preferred if R1 and R5 of formula II above are hydrogen. Furthermore, it is preferred if R6, R10, R11, R15, R16 and R20, if present, are hydrogen as well.

Especially "A" and "D", but also "E" and R1 to R5, may effect the temperature at which curing is initiated. Thus, they should preferably be selected such that the temperature at which curing is initiated is higher, such as least 20°C, at least 30°C or at least 40°C, higher than the melting temperature of cross linkable aromatic polyetherketone. As indicated above, such a difference allows for conventional processing of the cross-linkable polymer without initiating curing.

It is preferred if "A", "D", "G", and "K", are independently selected from the group consisting of a direct bond, an ether bond (-O-) and a carbonyl linkage (-C(O)-). Further is preferred if "E" is selected from the group consisting of hydrogen and a residue according to formula (IV).

By limiting A", "D", "E", "G", and "K", to be selected from these groups, the acetylenic compound will not introduce any further chemical elements, except to the carbon-carbon triple bond, into the aromatic polyetherketone. Upon curing the carbon-carbon triple bonds present within the cross linkable aromatic polyetherketone, the carbon-carbon triple bonds will typically react and become part of benzene residues. The cured cross linkable aromatic polyetherketone, will thus consist of benzene residues, ether bonds (-O-) and carbonyl linkages (-C(O)-). Thus, the cured cross linkable aromatic polyetherketone will present many of the beneficial properties of aromatic polyetherketones, such as wear resistance, thermal stability and chemical resistance.

In order to avoid self-polymerization of the acetylenic compound, it is preferred for R1 to R20, if present, in a compound wherein at least one of R1 to R20 is hydroxy, to be distinct from halogen, nitro, and acyl halide. Especially, it is preferred for R1 to R20, in a compound wherein at least one of R1 to R20 is hydroxy, to be distinct from acyl halide to avoid formation of esters.

Similarly, it is preferred for R1 to R20, if present, in a compound wherein at least one of R1 to R20 is halogen, nitro, or acyl halide, to be distinct from hydroxy. Especially, it is preferred for R1 to R20, in a compound wherein at least one of R1 to R20 is acyl halide, to be distinct from hydroxy to avoid formation of esters.

Self-polymerization by formation of ketone linkages or ether bonds, may according to one embodiment, be preferred, as it may put two triple bonds in proximity to each other and thus facilitating reaction with a third triple bond. Accordingly, at least one of R1 to R20, if present, may be hydroxyl and at least one may be halogen or nitro, according to such an embodiment.

Aromatic polyetherketones are typically synthesized by nucleophilic aromatic substitutions or Fridel-Craft acylations. The same reaction types may preferably be employed to introduce the acetylenic residue into the cross-linkable aromatic polyetherketones. Accordingly, in an embodiment wherein the acetylenic residue is to be introduced by nucleophilic aromatic substitution, at least one of R1 to R20, if present, is selected from the group consisting of hydroxy, halogen, such as fluorine, and nitro.

Similarly, in an embodiment wherein the acetylenic residue is to be introduced by Fridel-Craft acylation, at least one of R1 to R20, if present, may preferably be an acyl halide. However, an acetylenic residue to be introduced by Fridel-Craft acylation may also be an acetylenic residue which is not substituted by hydroxy, halogen, nitro or acyl halide.

In an embodiment, wherein the acetylenic residue is to be introduced by nucleophilic aromatic substitution and wherein the residue comprises halogen atom or a nitro group, it is preferred if the aromatic ring to be substituted is electron poor.

Thus, if any of R1 to R5 is halogen or nitro, it is preferred if "A" is a carbonyl linkage (-C(O)-). Similarly, if any of R6 to R10 and/or R16 to R20 is halogen or nitro, it is preferred if "G" and/or "K" is a carbonyl linkage (-C(O)-), respectively. Also, if any of R11 to R15 is halogen or nitro, it is preferred if "D" is a carbonyl linkage (-C(O)-).

In an embodiment wherein the acetylenic compound is to react with a acid halide monomer in a Friedel-Craft acylation, it is preferred if the acetylenic compound comprises at least one benzyl or phenoxy group..

An acetylenic compound to be used to introduce the carbon-carbon triple bond in chain may preferably be according to formula (VI) 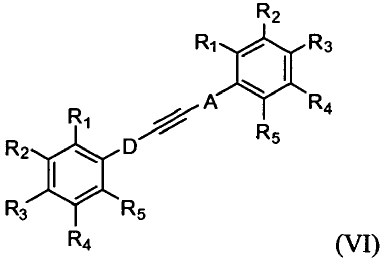 wherein R1 to R5, "A" and "D" are as disclosed above for formula (II). An acetylenic compound to be used to introduce the carbon-carbon triple bond in chain is preferably symmetrical. Thus, it is preferred if "A" equals "D".

For an acetylenic compound to be used to introduce the carbon-carbon triple bond as a pendant group or as an endcapping group, wherein "E" is a residue according to formula (IV), it is preferred if R11 and/or R15 are selected from the group consisting of hydrogen, C1-4 alkyl, such as methyl and tert-butyl, CF3 and a residue according to formula (V), wherein R16 to R20 are hydrogen, and that R12 to R14 are hydrogen.

For an acetylenic compound to be used to introduce the carbon-carbon triple bond as a pendant group, it is preferred that R1 and R5 are selected from the group consisting of hydrogen, C1-4 alkyl, such as methyl and tert-butyl, CF3 and a residue according to formula (III), wherein R6 to R10 are hydrogen, while two of R2 to R4 are distinct from hydrogen, the remaining of R2 to R4 being hydrogen. It is preferred if said two of R2 to R4 are R2 and R4, and R3 thus being hydrogen.

For an acetylenic compound to be used to introduce the carbon-carbon triple bond as an endcapping group, it is preferred that R1 and R5 are selected from the group consisting of hydrogen, C1-4 alkyl, such as methyl and tert-butyl, CF3 and a residue according to formula (III), wherein R5 to R10 are hydrogen, and that one of R2 to R4 is selected from the group consisting of halogen, such as fluorine, hydroxy, acyl halide, such as C(O)C1, nitro and a residue according to formula (III), the other being hydrogen.

According to one embodiment compounds according to formula (II) may be selected from the group consisting of:

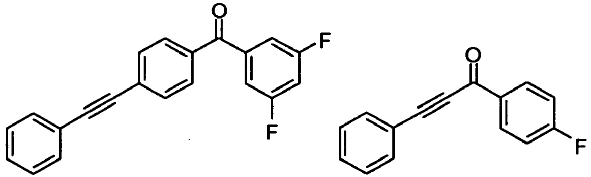

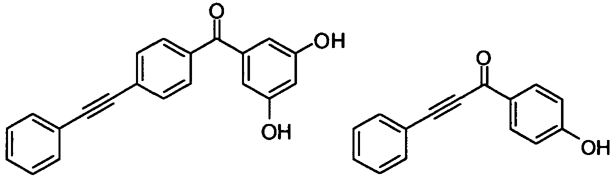

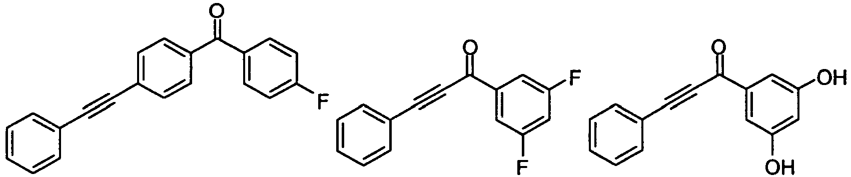

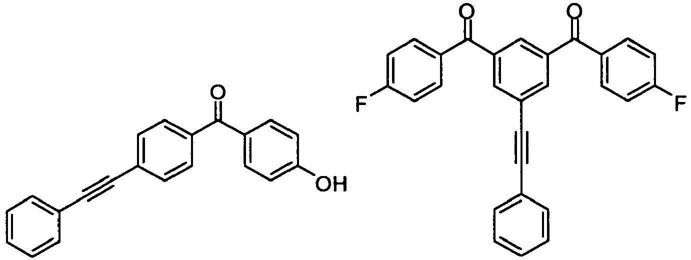

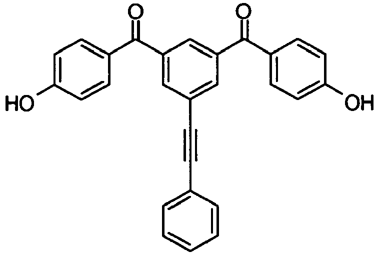

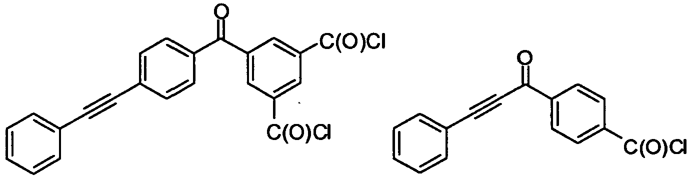

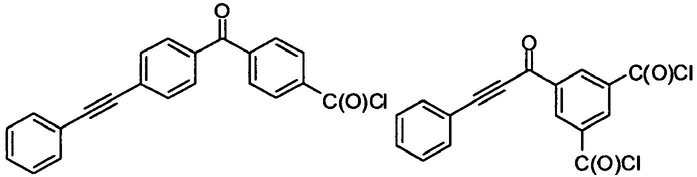

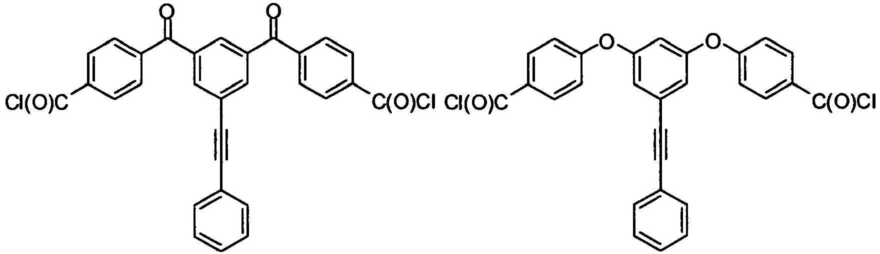

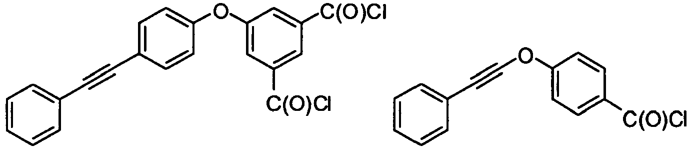

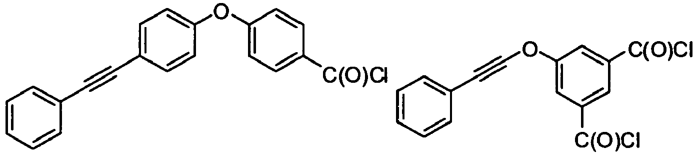

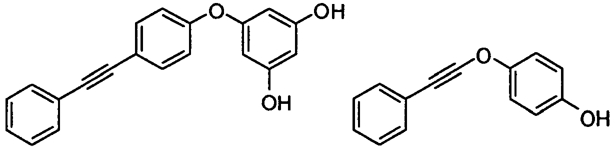

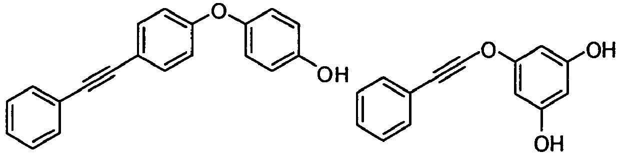

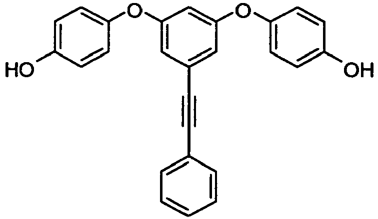

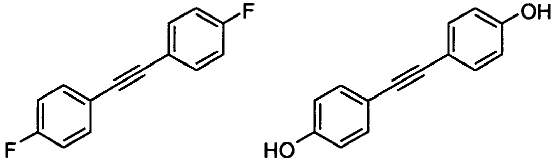

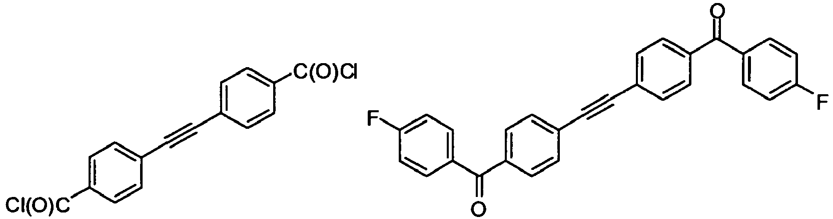

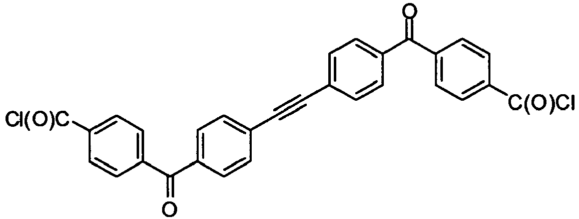

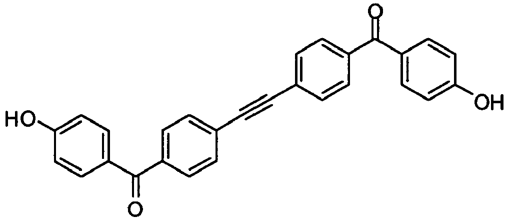

According to one preferred embodiment compounds according to formula (II) may be selected from the group consisting of:

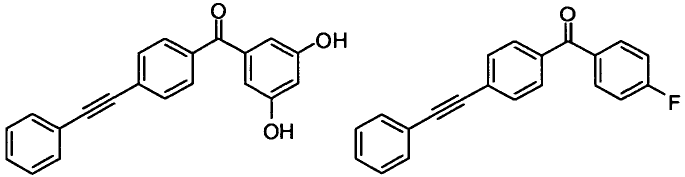

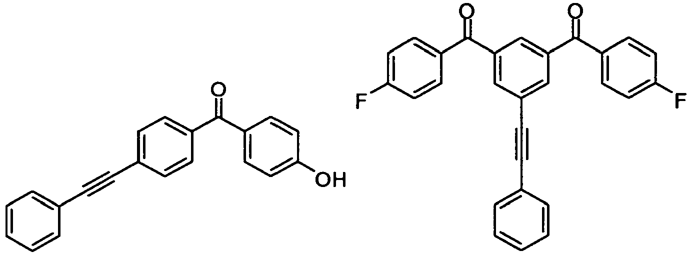

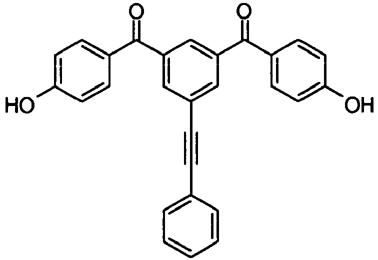

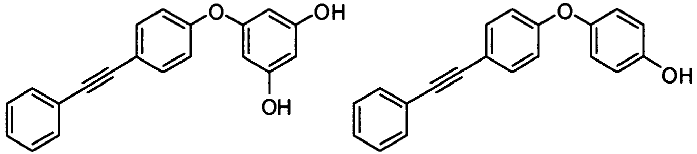

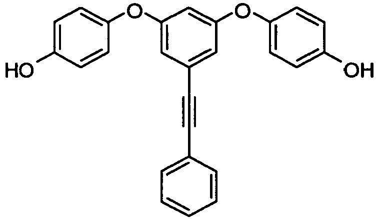

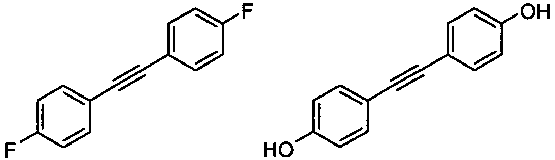

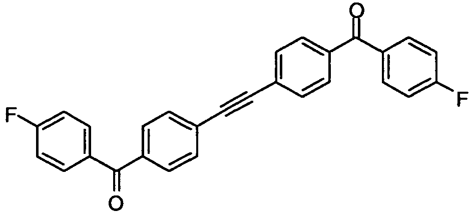

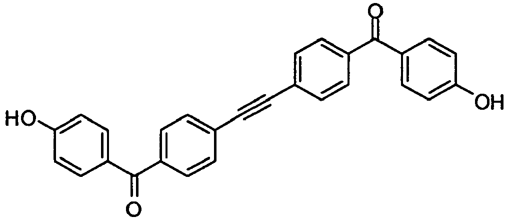

According to one embodiment the acetylenic compound may be a compound according to formula (X) 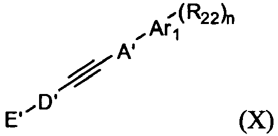 wherein
" A' " is a direct bond, an electron donating, linking group, such as methylene, or an ether (-O-) bond, or an electron withdrawing, linking group, such as a carbonyl linkage (-C(O)-);
" D' " is a direct bond, an electron donating, linking group, such as methylene, or an ether (-O-) bond, or an electron withdrawing, linking group, such as a carbonyl linkage (-C(O)-);
" E' " is selected from the group consisting of hydrogen, C1-4 alkyl, such as methyl, ethyl and tert-butyl, and a residue according to formula (XII);
Ar₁ is a benzene, napthalene or antracene residue;
R22 is independently selected from the group consisting of hydrogen, halogen, such as fluorine, hydroxy, nitro, acyl halide, such as C(O)Cl, and a residue according to formula (XI);
"n" in an integer of 0 (zero) to 5, if "n" is 0 (zero), Ar₁ is unsubstituted;
Formula (XI) is a residue as depicted below 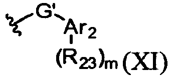 wherein
" G' " is a direct bond, an electron donating, linking group, such as methylene, or an ether (-O-) bond, or an electron withdrawing, linking group, such as a carbonyl linkage (-C(O)-);
Ar₂ is a benzene, napthalene or antracene residue;
R23 is independently selected from the group consisting of hydrogen, halogen, such as fluorine, hydroxy, nitro, and acyl halide, such as C(O)Cl;
"m" in an integer of 0 (zero) to 5, if "m" is 0 (zero), Ar₂ is unsubstituted; and the waved line indicates the point of attachment;
Formula (XII) is a residue as depicted below 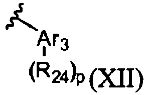 wherein
Ar₃ is a benzene, napthalene or antracene residue;
R24 is independently selected from the group consisting of hydrogen, halogen, such as fluorine, hydroxy, nitro, acyl halide, such as C(O)Cl and a residue according to formula (XIII);
"p" in an integer of 0 (zero) to 5, if "p" is 0 (zero), Ar₃ is unsubstituted.; and the waved line indicates the point of attachment;
Formula (XI) is a residue as depicted below 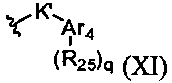 wherein
" K' " is a direct bond, an electron donating, linking group, such as methylene, or an ether (-O-) bond, or an electron withdrawing, linking group, such as a carbonyl linkage (-C(O)-);
Ar₄ is a benzene, napthalene or antracene residue;
R25 is independently selected from the group consisting of hydrogen, halogen, such as fluorine, hydroxy, nitro, and acyl halide, such as C(O)Cl;
"q" in an integer of 0 (zero) to 5 if "q" is 0 (zero), Ar₄ is unsubstituted.; and the waved line indicates the point of attachment;
According to one embodiment the acetylenic compound may be a compound comprising a phthalimide residue according to formula (VII) 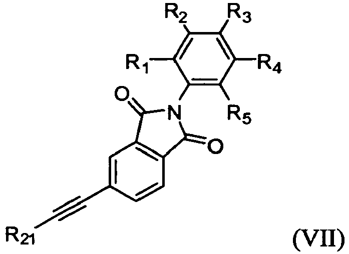 wherein
R1 to R5 are as disclosed herein for formula (II); and
R21 is selected from the group consisting of hydrogen, C1-4 alkyl, such as methyl, ethyl and tert-butyl, and a residue according to formula (III).

It is preferred if R1 and R5 in formula (VII) are hydrogen.

For an acetylenic compound according to formula (VII) to be used to introduce the carbon-carbon triple bond as a pendant group, it is preferred that R1 and R5 of formula (VII) are hydrogen, while two of R2 to R4 are not, the remaining one of R2 to R4 being hydrogen. It is preferred if said two of R2 to R4 are R2 and R4, and R3 thus being hydrogen.

For an acetylenic compound according to formula (VII) to be used to introduce the carbon-carbon triple bond as an endcapping group, it is preferred that R1 and R5 of formula (VI) are hydrogen, and that one of R2 to R4 is selected from the group consisting of halogen, such as fluorine, hydroxy, acyl halide, such as C(O)Cl, nitro and a residue according to formula (III), the other being hydrogen, such that 4 out of 5 of R1 to R5 are hydrogen.

Further, the acetylenic compound may be selected from the group consisting of alkynyl, alkylalkynyl, arylalkynyl and alkylarylalkynyl phenols, cresoles, hydroquinones, catechols, resorcinols and/or biphenols as well as compounds such as N-(4-hydroxy- phenyl)-4-(arylalkynyl)phthalimides and/or N-(4-hydroxyphenyl)-4-(alkynyl)phthalimides.

The acetylenic compound may be selected from the group consisting of ethynyl phenol, phenylethynyl phenol, naphthylethynyl phenol, ethynyl cresole, phenylethynyl cresole, naphthylethynyl cresole, ethynyl hydroquinone, phenylethynyl hydroquinone, naphthylethynyl hydroquinone, ethynyl catechol, phenylethynyl catechol, naphthylethynyl catechol, ethynyl resorcinole, phenylethynyl resorcinole, naphthylethynyl resorcinol, ethynyl biphenol, phenylethynyl biphenol, and naphthylethynyl biphenol.

The acetylenic residue is preferably present in said cross-linkable aromatic polyetherketone in an amount corresponding to at least 0.01 mole%, such as between 0.5 and 40 mole%, between 0.5 and 25 mole%or between 2 and 15 mole%, of total molar amount of monomers, oligomer and/or polymers, such as monomers, used to obtain said acetylenic aromatic polyether.

Similarly, it is preferred that the total weight of the acetylenic residues in the cross-linkable aromatic polyetherketone is at least 0.01 wt%, such as between 0.5 and 40 wt%, 0.5 and 20 wt%, or between 2 and 15 wt%.

A high amount of the acetylenic residue will affect the properties of the obtained polymer. As an example a too high amount will reduce or even eliminate the presence of structured, crystalline parts within the solid aromatic polymer. On the contrary, a polymer with a too low amount of the acetylenic residues may not be enough cross-linked to affect the properties of the polymer in a significant way.

Said cross-linkable aromatic polyetherketones may be partly crystalline in solid state, such as being at least 10% crystalline. Aromatic polyetherketones not comprising any acetylenic residue will typically display a crystallinity of 20 to 50%. As the presence of as acetylenic residues may affect and reduce the crystallinity, cross-linkable aromatic polyetherketones as disclosed herein will typically be less than 40%, such as less than 30%, crystalline in solid state.

The level and extent of crystallinity in a polymer is preferably measured by wide angle X-ray diffraction (also referred to as Wide Angle X-ray Scattering or WAXS), for example as described by Blundell and Osborn (Polymer 24, 953, 1983).

Alternatively, crystallinity may be assessed by Differential Scanning Calorimetry (DSC).

While the crystalline parts may be regarded as parts providing the polymer with physical cross-linking, the amorphous parts significantly contributes to impact resistance and surface properties as well as to CTE. However, the acetylenic residues will typically end up in the amorphous parts of the solid polymer and the cross-linking will hence provide the polymer with enhanced properties, such as increased resistance towards creep when mechanically loaded and increased glass temperature (Tg) inheriting from the amorphous phase.

One objective of the invention is to provide a polymer which after cross-linking has structural properties similar or superior to the ones of polyimides. Further, the polymer should be suitable to be processed by traditional processing methods for non-Newtonian or viscoelastic material, such as injection molding, before being cross-linked. The polymers as disclosed herein will at least have comparable and typically superior processability compared to polyimides. Furthermore, the polymers as disclosed herein should preferably, similar to other thermoplastics, be suitable for mold injection.

Accordingly, cross-linkable aromatic polyetherketones as disclosed herein should preferably display non-Newtonian properties in molten state, i.e. they should preferably be shear thinning. The non-Newtonian behavior will typically be similar to the one of the corresponding PAEK not comprising any acetylenic residues or at least not deviating significantly from the non-Newtonian behavior of such PAEK. As well known to the skilled person, the rheological properties of molten polymers are dependent on the average molecular weight, i.e. the average chain length of the polymer chain. While oligomers, such as linear structures comprising less than 10 repeating units in average, typically will display Newtonian properties in molten state, a polymer with a sufficiently high molecular weight will display non-Newtonian properties in molten state.

According to one embodiment sufficiently high molecular weight is intended to mean an average molecular weight, as determined by LC-Mass/SEC, MALDI or melt rheology, corresponding to at least 30 repeating units such as at least 50 repeating units.

Evidently, there is a practical upper limit for the average molecular weight, i.e. the chain length. Accordingly, the average chain length of the cross-linkable aromatic polyetherketones as disclosed herein may be lower than 500 such as lower than 100 repeating units.

One of the objects of the present invention is to modify the mechanical properties of aromatic polyetherketones and compositions comprising those. Among these modifications of properties can be mentioned: higher softening temperature, higher E-modulus and improved ability to counteract creep strain.

Accordingly, one embodiment relates to a cross-linked, cross-linkable aromatic polyetherketone as disclosed herein. The cross-linking will affect the properties of the polymer, such as the thermo stability, the glass transition temperature, mechanical properties, such as creep behavior, ductility, E-modulus and elongation at break.

One embodiment, relates to a cross-linked, cross-linkable aromatic polyetherketone as disclosed herein, wherein the cross-linking has increased the E-modulus with at least 10%, such as at least 20% or even 30%.

Cross-linked is intended to mean that at least 15 %, such as at least 30, 50, 70 or at least 85%, of the carbon-carbon triple bonds of the cross-linkable aromatic polyetherketone have been cross linked, such as via a percyclic, addition or diradical reactions. The preferred degree of cross-linking will differ between different polymers and different applications.

The cross-linking will typically increase the glass transition temperature. It is preferred if the glass transition temperature after cross-linking, cross-linkable aromatic polyetherketone as disclosed herein is increased by at least 5 to 20°C, such as at least 10 to 50°C or at least 20 to 80°C.

It is understood that the acetylenic groups of the cross-linkable aromatic polyetherketone of the present invention may be arranged as endcapping, in-chain and/or pendent groups. This will, of course provide the cured polymer with different properties.

It is possible to further modify the mechanical properties by using methods known in the art together with the cross-linkable aromatic polyetherketone and/or the composition herein disclosed. The purpose of such modifications is typically to reinforce for strength, to fill for higher density, dimension stability and higher stiffness, adding of conductive materials for avoiding static charging and pigmentation for aesthetic properties.

It is known in the art to add different types of fibres as reinforcements. Fibres suitable for use together with the acetylenic aromatic polyether and/or the composition of the present invention can be exemplified by glass fibres, carbon fibres, steel fibres, aramide fibres, natural organic fibres, such as cellulose fibres, flax fibres, cotton fibres and silk. However, most organic and inorganic fibres that are able to withstand the process temperatures may prove useful. It is also possible to use fullerenes for reinforcing as well as for changing other mechanical properties.

Fillers are typically used for increasing dimension stability even though a few other mechanical properties, such as density, rigidity and acoustic properties may be altered by means of fillers. Fillers may be organic like cellulose or inorganic, such as minerals like for instance mica, lime and talcum.

It is furthermore possible to add stabilizers to said cross-linkable aromatic polyetherketone and/or said composition, such as compounds stabilizing towards exposure to ultraviolet light, heat or other exposure that may cause for instance polymer chain breakdown. One may in this context also mention the possibility to add different kinds of fire retarding agents to the polymer.

It is furthermore possible to modify the properties of the cross-linkable aromatic polyetherketone and/or the composition comprising such a polymer by means of a plasticizers, lubricants or impact modifiers yielding for instance a polymer with elastic properties having improved thermal stability. It is also possible to utilize the cross-linkable aromatic polyetherketone, as disclosed herein, in polymer blends as well as in co-polymers.

The electrical properties of the cross-linkable aromatic polyetherketone and/or the composition comprising such a polymer of the present invention may also be modified within the scope of the invention. This may be achieved by adding for instance an insulation modifier. The most common modifier is carbon black which is used in smaller quantities to achieve antistatic properties. There are besides carbon black also other known substances and compounds used for obtaining above or portions of thereof. Metal fibres, carbon fibres and metal powder are only a few examples of such materials. Some of these materials also serve the purpose of reinforcing and filling agents.

Said cross-linkable aromatic polyetherketone and/or said composition may also be expanded to change the density and thermal insulation property by adding a blowing, expanding or foaming agent. This may of course be used in combination with other additives.

It is in some applications also advantageous to modify the surface properties of the cross-linkable aromatic polyetherketone and/or the composition. One such way is by adding anti-microbial agents for which the purpose is obvious. Another way is by adding so called tackifiers increasing friction if and when needed.

A further embodiment refers to a composition comprising at least one cross-linkable aromatic polyetherketone as disclosed above. The composition may comprise at least one additional polymer, such as at least one additional aromatic polyetherketon, and/or at least one filler, reinforcement, pigment, plasticiser and/or any other additive known in the art. Preferred embodiments of said cross-linkable aromatic polyetherketone are as disclosed above. Said cross-linkable aromatic polyetherketone is preferably present in an amount corresponding to between 0.1 and 99.9 wt%, such as between 1 and 40 wt% or between 1 and 25 wt%.

A yet further embodiment refers to an article, such as a moulded article, such as a three-dimensional article, obtainable by shaping, such as moulding, at least one cross-linkable aromatic polyetherketone as disclosed above or at least one composition likewise disclosed above. Preferably the cross-linkable aromatic polyetherketone in the article is cured, i.e. the polymer is cross-linked.

Cross-linking of the cross-linkable aromatic polyetherketone may be heat initiated, upon and/or subsequent to said moulding. Said heat inducing cross-linking reaction of the acetylenic group(s) may be provided externally or in situ generated.

Further, the cross-linking may be enhanced by the presence of an effective amount of at least one compound promoting cross-linking reactions of acetylenic polymers, such as a sulphur or an organic sulphur derivative as disclosed in for instance US patent no. 6,344,523 and/or a radical initiator.

However, it is preferred if the cross-linking is initiated without having to provide a compound promoting cross-linking reactions of acetylenic polymers. Such additional compounds may negatively affect the properties of the cross-linkable aromatic polyetherketone as well as of the cured polymer.

According to one embodiment, three-dimensional article is intended to mean an article, wherein the cross-section at any given axes, due to the moulding process used, may be varied. Accordingly, such an embodiment does not encompass articles, such as fibers, having a constant diameter.

Articles as disclosed herein may be used as structural elements themselves. Such use is further elaborated below.

The cross-linkable aromatic polyetherketone may be formed, such as moulded, into an article without initiating cross-linking. Furthermore, and importantly the cross-linkable aromatic polyetherketone may thus be processed without initiating cross-linking.

Accordingly, additives to a composition comprising an cross-linkable aromatic polyetherketone, such as fillers, stabiliser, plasticiser, lubricant, impact modifier, photoinitiator and blowing, expanding and/or foaming agents, may be added and mixed with the acetylenic polyamide without initiating cross-linking.

As the herein disclosed cross-linkable aromatic polyetherketone and/or the herein disclosed composition preferably is to be shaped into an object prior to initiating cross-linking, it is advantageous if the cross-linkable aromatic polyetherketone and/or the composition comprising said polyether is completely melted at a temperature lower than the temperature at which curing is initiated, such as least 20°C, at least 30°C, 40°C or 50°C, lower than the temperature at which curing is initiated.

The melting and curing temperature (cure on-set) may be determined by DSC heating at 10 C/min. Melting may be regarded as to be complete when the heat flow returns to a baseline or steady flow. Cure on-set is determined by On-set Point auto analysis using TA-Instruments Universal Analysis 2000 version 4.7A software.

If the temperature at which curing is initiated is too close to the melting temperature, the possibility of processing the polymer is very limited. As an example, a too low difference may imply that curing of the polymer is initiated already in the extruder, before being injected into the mold.

If the melting temperature of the cross-linkable aromatic polyetherketone and/or the composition comprising said polyether is lower than the temperature at which curing is initiated, the cross-linkable aromatic polyetherketone may be formed, such as moulded, into an article without initiating cross-linking.

Furthermore, and importantly, the cross-linkable aromatic polyetherketone may thus be processed without initiating cross-linking. Accordingly, additives to a composition comprising cross-linkable aromatic polyetherketone, such as fillers, stabiliser, plasticiser, lubricant, impact modifier, photoinitiator and blowing, expanding and/or foaming agents, may be added and mixed with the acetylenic polyamide without initiating cross-linking.

As disclosed above, the acetylenic residue should preferably be selected such that a difference of at least 20°C, between the temperature at which the cross-linkable aromatic polyetherketone is completely melted and the temperature at which curing is initiated, is obtained. In some applications, for instance big mechanical structures or load bearing applications, it may however be sufficient if the temperature, at which curing is initiated (cure on-set), is well above the glass transition temperature, such as at least 50°C above the glass transition temperature in order to achieve a good annealing under controlled circumstances.

While the temperature at which curing is initiated should preferably be well above the melting temperature of the polymer at is advantageous if it is not too high in order to facilitate the initiating of curing. Accordingly, it is preferred if the temperature at which curing is initiated is below 500°C, such as below 450 or 400°C.

According to one embodiment moulding is intended to mean moulding techniques in which the dimension along any given axes may be varied. This may be achieved by use of a mould with a cavity. Accordingly, such an embodiment encompasses injection moulding, blow moulding in a mould cavity and compression moulding. However, such an embodiment does not encompass extrusion moulding as the dimension along the longitudal axes not can be varied in extrusion moulding. Cross-linking of the acetylenic aromatic polyetherketone may be performed either directly within the mould or separately and subsequent to the moulding.

According to one embodiment, curing of the herein disclosed cross-linkable aromatic polyetherketone and/or the herein disclosed composition are advantageously initiated by providing the mould, the inlet or the hotrunner with a choking valve or check valve arrangement creating heat in the polymer through friction caused during the injection phase. The valve arrangement may be a solid arrangement whereas the generated heat is guided through the velocity of injection. There are numerous ways to guide the injection velocity.

One way to guide the velocity is through PLC (Programmable Logic Controller) used for guiding the injection moulding parameters of most modern injection moulding machines. The operator will then have to perform a series of trials where he in small steps increase the injection speed until the threshold temperature in the valve arrangement is sufficient to initiate the curing process. The valve arrangement is advantageously made adjustable for the same purpose.

Another way is to guide the process actively by using a temperature sensor in the mould and/or in the valve arrangement. A pressure sensor advantageously arranged just before the valve arrangement, optionally with a second pressure sensor arranged after the valve arrangement, may serve the same purpose as it indicates the pressure drop and thereby the friction generated. The temperature and pressure sensor(s) may also be used in combination. The data generated from these sensor(s) are then used as process data for guiding the injection moulding cycle. This data may then be used for guiding the injection sequence through direct guiding or so-called statistical process guiding. Statistical process guiding is especially advantageous where there is a risk for measurement lag, data delay or process guiding resonance in the process.

It is also possible to design in such a way that choking portions in the mould itself will constitute a part of the article produced. It will in this way be possible to:
a) manufacture articles that due to its size or through very quick curing of used polymers otherwise would be impossible to manufacture, and/or,
b) manufacture articles wherein only certain portions are cured, while other portions have the properties of an uncured polymer.

It is furthermore possible to actively guide the orifice size of the check valve thus allowing the temperature profile to be guided through other means than only the injection speed. This can for example be achieved through means of a hydraulic actuator constantly adjusting the size of the opening through the check valve. This guiding can be performed through PLC data only or by the aid of measuring data in the mould and/or around the valve as described above.

The check valve may also be provided with guided heating and/or cooling, either as a replacement for mechanically adjusting the orifice size, or as a complement thereto. Also this can be guided through PLC data only or by the aid of measuring data in the mould and/or around the valve as described above.

The mould is advantageously provided with one or more temperature sensors for the purpose of detecting the exothermic heat caused by the curing process. It is suitable to arrange several such sensors along the flow path of the polymer in order to detect variations in the curing in different portions of the article produced. These measurements are suitably used for statistical process guiding.

Similar principles as described above may be used in extrusion moulding. It will, as known for the skilled person, be easy to achieve a favorable temperature profile for the curing where the polymer material is first plasticized, then heated further in the extrusion mould to initiate the curing while the later portions of the extrusion mould will cool the article enough to keep its shape. The continuous nature of the process is well suited for the curing of the cross-linkable aromatic polyetherketone and/or the composition herein disclosed. Further heating is advantageously achieved by heating a predetermined portion of the extrusion mould by means of an external heat source. This will allow the operator to guide the curing process not having to rely completely on the extrusion velocity for heat generation.

The herein disclosed cross-linkable aromatic polyetherketone and the herein disclosed composition are also well suited for use in a compression moulding process. A predetermined amount of polymeric material may be preheated to a temperature somewhat under the curing temperature and placed in an open mould. The mould is then closed so that the polymeric material is distributed in the mould as is the normal procedure in compression moulding. The preheating, the mould temperature, the viscosity of the polymeric material and the compression pressure is adapted so that the friction and compression pressure will generate the heat needed to initiate the curing alternatively the compression moulding tool is heated to a temperature that makes the curing reaction to be activated. It is also in a compression moulding process advantageous to provide the mould with one or more temperature and/or pressure sensors for the purpose of detecting the exothermic reaction during the curing.

The herein disclosed cross-linkable aromatic polyetherketone and the herein disclosed composition may also be used to produce fibers, such as by extrusion. Said fibers may be cured either initiation of the curing reaction at the end of the dye and finalized during the elongation of the fiber or after the stretching (elongation) of the fiber by separate heat treatment to a temperature above the initiation temperature of the curable groups. Curing can also be fmalized in a later stage of the fiber bundles or fiber rolls by separate heat treatment or in some cases in the final application when the fibers are processed into their final application.

Further, the herein disclosed cross-linkable aromatic polyetherketone and the herein disclosed composition may also be used to produce polymer film, such as films having a thickness of less than 500 µm, such as less than 300 µm. Typically thermoplastic films are obtained by extrusion followed by rolling. Curing of the film may be initiated during the rolling, such by use of heated rollers, heat radiation by IR or other source or convection heating. The film may also be baked or post-cured.

The viscosity of the polymeric material during processing may be altered by means of rheology modifiers in order to obtain desired process parameters.

The temperature initiating curing is depending on the structure of the acetylenic portion of the cross-linkable aromatic polyetherketone. As elaborated above, certain temperature intervals, with respect to the initiation of curing are preferred. The temperature at which curing is initiated should be low enough to minimize material break down of the polymer chain during curing.

There are several ways to modify the acetylenic portion as disclosed in the present application. There is also the possibility to modify the curing temperatures by utilising a catalyst or initiator as disclosed above. Said catalysts have proven to radically lower the curing initiation temperature. It is also possible to add coupling agents.

It is, according to one embodiment, preferably to perform at least a portion of the curing after the moulding process. This may for example be performed through electron beam (EB) curing or ultraviolet (UV) curing. This may also call for the need of for instance one or more photoinitiators. In most applications only a surface curing can be achieved through means of UV curing since the thermoplastic polymer is not transparent, however EB curing will be possible to utilize even for opaque polymers. In applications such as electronic coatings were certain parts of the surface need to be removed the advantage with curing after the treatment or coating is advantages.

It is also possible to continue an initiated curing at a lower temperature. The article produced is here after the moulding procedure placed in an oven for a period of time ranging from half an hour (30 minutes) to several days, such as 3 days or more. This process is known as baking. In order to keep important portions of the article, such as the flange portion of an oil pan, within desired tolerances the article may be arranged on a jig during the curing process.

Curing of the surface may be performed through corona treatment or flash heating. It will through this process be possible to cure the surface of a produced article without softening the polymeric material.

The herein disclosed cross-linkable aromatic polyetherketone and composition are, due to the improved mechanical properties, such as improved thermal stability and E-modulus, allowing said cross-linkable aromatic polyetherketone, when cured, and/or said composition to be used at higher temperatures then possible with other polymers, such as aromatic polyetherketone. Accordingly, cross-linkable aromatic polyetherketones as disclosed herein are well suited for manufacturing of a great number of articles and may be used to replace polyimides.

Preferably, such articles may be used in wear applications and electrical applications. Examples of typically articles are connector housings, sealing for hot water and vapor systems and high heat exposed bushings.

Further, suitable and typical application areas will be found within, but not limited to, civilian and military transportation vehicles, such as cars, trucks, busses, motorcycles, trains, ships and aircrafts as well as recreational vehicles wherein for instance demands for weight reduction is an increasing demand.

Automotive, aeronautic and aerospace components suitably produced from the cross-linkable aromatic polyetherketone and/or the composition as disclosed herein comprise, but are not limited to, for instance exterior body panels and glazing, such as back lights, door panels, fenders, panoramic roofs, roof modules, tailgates, heat shields, armours and spall linings. Further suitable articles include exterior components, such as vent grilles, door handles, front grilles, mirror systems, roof racks, running boards, spoilers, tank flaps, wheel housings and wheel covers as well as traditional after market products.

It is also possible to produce larger components for trucks, busses, ships and aircrafts. The cross-linkable aromatic polyetherketone and/or the composition may furthermore be used in lighting, such as fog lamp lenses, reflectors and housings; headlamp bezels, housings, lenses and reflectors; lamp support brackets; projector lamp reflectors and holders; rear combination lamp housings, reflectors and lenses. These can be base coated, primed for painting, direct metallised and/or moulded in colour.

The cross-linkable aromatic polyetherketone and/or the composition as disclosed herein may also be used for other structural as well as interior components, such as composite headliners, energy absorption systems, front end modules, instrument panels, interior trimmings, load floors, pedestrian energy absorption systems and storage bins, as well as parts suitable for motorcycles, such as no-paint parts, tanks, fairing, chassis, frames, luggage containers and racks, as well as motorcycle rider safety items, such as helmets and all sorts of shields.

The cross-linkable aromatic polyetherketone and the composition herein disclosed may also be used in power train parts, such as air intake, automotive gears, wire coatings, brackets, sealings, electronic and electronic housings, fuel system components, pulleys, sensors, throttle bodies, transmissions and transmission parts, and valve rocker covers as well as other components in vehicle engine bays wherein heat may render prior art polymers insufficient.

Further suitable application areas of the cross-linkable aromatic polyetherketone and/or the composition as disclosed herein include, but are not limited to, articles used in home entertainment, such as television apparatus and equipment, projectors and audio devices, as well as mobile entertainment and information carriers and communication devices. Further application areas include communication devices such as antennas, satellite dishes, articles and devices for recreation, entertainment and sport activities wherein for instance the weight to strength ratio is important, such as light weight components in extreme sport equipment including body protection, parts to mountain bikes, heat shields and the like. Further suitable applications include articles such as fishing rods and golf clubs.

Furthermore, creep strain in polymers, which today is a problem calling for over-dimensioning of carrying structures made of polymeric materials, may be eliminated or at least reduced by use of the cross-linkable aromatic polyetherketone and/or the composition as disclosed herein.

It is also advantageous to utilize the cross-linkable aromatic polyetherketone and/or the composition herein disclosed in household, building and construction industry. The cross-linkable aromatic polyetherketone and/or the composition may be used for beams, girders, rails, panels, window frames and sub assemblies, roofing, flooring, doors and door frames, handles, knobs, cabinets, housings, kitchen appliances and central heating and energy recovery systems as well as for solar energy collectors and other parts of solar and wind energy and heating systems and equipment. Further application areas may be found among electrical components, equipment and installations, such as circuit breakers, films, flexible and rigid wire coatings, housings and discrete components.

The herein disclosed cross-linkable aromatic polyetherketone and/or composition may also be used in health care, including man and animal, and laboratory equipment, such as cardiovascular and blood care equipment, oxygenators, filters, pumps, masks, sleep therapy equipment, drug delivery devices, inhales, syringes, injection devices, stopcocks and valves as well as orthopaedic equipment, external bone fixation, joint trials, mechanical instruments, surgical instruments, electrosurgical instruments, endomechanical instruments and access devices as well as sub components and spare parts to the above. The cross-linkable aromatic polyetherketone and/or the composition may furthermore be used for supporting, diagnostic and monitoring equipment, such as hand instruments, equipment for imaging, ocular devices, dental devices, laboratory ware and vials as well as sterilisation trays.

Without further elaboration, it is believed that one skilled in the art may, using the preceding description, utilise the present invention to its fullest extent. The following preferred specific embodiments are, therefore, to be construed as merely illustrative and not limitative of the remainder of the disclosure in any way whatsoever.

Although the present invention has been described above with reference to (a) specific embodiment(s), it is not intended to be limited to the specific form set forth herein. Rather, the invention is limited only by the accompanying claims and, other embodiments than the specific above are equally possible within the scope of these appended claims, e.g. different than those described above.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc do not preclude a plurality.

### Examples

The following examples are a mere examples and should by no mean be interpreted to limit the scope of the invention. Rather, the invention is limited only by the accompanying claims.

Example 1-3 refers to preparation of cross-linkable aromatic polyetherketones according to embodiments disclosed herein, while example 4 and 5 are reference examples. All starting materials were obtained from commercial sources, unless not stated otherwise, and were used without further purification unless otherwise noted

### Example 1

10.0 parts by weight of 4,4'-difluorobenzophenone, 9.9 parts by weight of 4,4'-dihydroxybenzophenone, 2.2 parts by weight of N-(4-hydroxyphenyl)-4-(phenylethynyl)-phthalimide and 9.9 parts by weight of K2CO3 were charged in a reaction vessel equipped with condenser, thermometer, mechanical stirrer, water trap and nitrogen inlet and dissolved in a mixture of 150 parts by weight of sulpholane and 270 parts by weight of toluene and heated to reflux over nitrogen atmosphere. The reflux was continued for 2 hours at 120°C until reaction water no longer could be collected. The temperature was gradually raised to 160°C during 5 hours and toluene was distilled off. The reaction mixture was kept at 160°C for a further 30 minutes and subsequently cooling poured into 220 parts by weight of 0.1M HCl to yield a mixture having a pH of 3. The mixture was stirred for 30 minutes, filtered, washed with 100 parts by weight of water and dried in an oven over night to yield a light yellow solid product.

LC analysis confirmed that the acetylenic compound N-(4-hydroxyphenyl)-4-(phenyl- ethynyl)-phthalimide was co-polymerised into the obtained polymer, as an end-capping group, which thus was an acetylenic polyether ketone according to an embodiment of the present invention.

The obtained acetylenic polyether ketone had a melting point of 345°C as determined by DSC analysis.

### Example 2

3,5-Difluoro benzoic acid (50g, 0.316 mol) was dissolved in 300 ml toluene at room temperature. Thionyl chloride (115 ml, 1.58 mol) was added to the solution, during 30 min, whereupon the mixture was heated and refluxed during 6 h. Excess thionyl chloride was distilled off. Toluene (300 ml), triethyl amine (66 ml, 0.474 mol) and phenylacetylene (34.7 ml, 0.316 mol) were added to the resulting mixture, followed by nitrogen purge. Palladium(II) acetate (0.142 g, 6 mmol) was added and the mixture was stirred during 2 h. 300 ml of toluene and 150 ml of water was added. After stirring and phase separation, the organic phase was washed with 150 ml 6.7 % NaOH (aq.), 110 ml 6.6 % HCl (aq.) and dried with MgSO4. The mixture was filtered and concentrated under vacuum. 200 ml of methanol was added and the solution was concentrated under vacuum to a residual volume of 150 ml. After cooling to 20°C the solid product was collected by filtration, washed with 2x50 ml of methanol and dried under vacuum to yield 1-(3,5-difluorophenyl)-3-phenyl-prop-2-yn-1-one (PEKDF) as a solid material (44.2 g, 0.183 mol). The identity of the acetylenic compound was confirmed by LC-MS. The melting point of the obtained 1-(3,5-difluorophenyl)-3-phenyl-prop-2-yn-1-one was 89°C, as determined by DSC.

4,4-difluorobenzophenone (125.0 g, 0.57 mmol) hydroquinone (56.5 g, 0.51 mmol) potassium carbonate (118.8 g, 0.86 mmol), sulfolane (600 mL) and toluene (1200 mL) were mixed in a 2L glass reactor equipped with dean-stark and heated to reflux over nitrogen. PEKDF (13.8 g, 0.06 mmol) was added to the reaction mixture after one hour reflux and the reflux was continued for one hour further. Then toluene was distilled off during 4 hours while the temperature was increased from 119°C to 190°C. HCl was added (1200 mL, 0.5 M) until the pH reached 3. The mixture was filtered through a glass filter funnel and the solid material was washed three times with water (3 x 500 mL) and was dried in an oven at 105°C for 24 hours to give a solid product (145 g), having PEKDF incorporated as a pendant group. The melting point of the obtained polymer was 300-350°C, as determined by DSC analysis. No free PEKDF monomer was detected by analysis with LC-MS.

### Example 3

4-Bromophenol (289.8 g, 1.675 mol) and acetic anhydride (237.5 ml, 2.513 mol) were refluxed during 3 h and then cooled to rt. Water (500ml) was added during 25 min and then toluene (1000 ml) was added. The organic phase was separated and washed with 2x500 ml of 7,4 % NaHCO3, dried with MgSO4 and filtered which yielded 1200 ml of toluene solution of acetylated 4-bromophenol.

636 ml of the solution and triethyl amine (248 ml, 1.776 mol) were mixed and purged with nitrogen, and triphenyl phosphine (0.70 g, 2.7 mmol), Copper(I) iodide (0.34 g, 1.8 mmol) and Bis(triphenylphosphine)palladium dichloride (0.62 g, 0.9 mmol) were added. The mixture was heated to 80°C and trimethylsilyl acetylene (138 ml, 0.977 mol) was added during 1h. The resulting mixture was stirred at 80°C over night, and then filtered. NaOH (aq) (107 g in 320 ml H2O) was added during 30 min to filtrate, and then refluxed during 5 h. After cooling to rt, phases were separated. Aqueous phase was acidified with 230 ml HCl (conc.) and extracted with 3x300 ml toluene. The combined organic extracts were dried with MgSO4.

Mixture was filtered, and filtrate was combined with 564 ml of previous mentioned toluene solution of acetylated 4-bromophenol and triethyl amine (219 ml, 1.57 mol). The mixture was purged with nitrogen, whereupon triphenyl phosphine (0.62 g, 2.4 mmol), Copper(I) iodide (0.30 g, 1.6 mmol) and Bis(triphenylphosphine)palladium dichloride (0.55 g, 0.8 mmol) were added. Mixture was heated to 80°C during 7 h, and then allowed to cool to rt over night, whereupon the mixture was filtered. The obtained product was dried under vacuum to obtain diacetylated 4-[2-(4-hydroxyphenyl)ethynyl]phenol as a solid material (7.8 g, 26.5 mmol).

Diacetylated 4-[2-(4-hydroxyphenyl)ethynyl]phenol (8g, 0.038 mol) was dissolved in MeOH/KOH mixture (60 mL, 20g KOH) and stirred at room temperature for one hour. The mixture was acidified by addition of HCl (1M) until the pH was 2-3 and precipitate had been formed. The solid material was filtered off and dried in an oven at 105°C for 24 hours to obtain 4-[2-(4-hydroxyphenyl)ethynyl]phenol (OHPEP) as a white solid product (3.7 g). No starting material was found by TLC analysis using EtOAC/Heptane (50:50 mixture) as solvent system. LC-MS analysis of the product gave only one peak in UV with the right mass peak for the hydrolyzed product.

4,4-difluorobenzophenone (36.4 g, 0.17 mol) hydroquinone (16.5 g, 0.15 mol) potassium carbonate, (34.6 g, 0.25 mol), OHPEP (3.5 g, 0.02 mol), sulfolane (180 mL) and toluene (360 mL) were mixed in a 1L glass reactor equipped with dean-stark and heated to reflux over nitrogen. Water was continuously removed during 2 hours, then toluene was distilled off during 2 hours while the temperature was increased from 110°C to 170°C. The reaction was continued for 45 minutes and was then cooled down to room temperature. HCl was added (400 mL, 0.5 M) until pH reached 3. The mixture was filtered through a glass filter funnel and the solid material was washed three times with water (3 x 200 mL) and was dried in an oven at 105°C for 24 hours to give a solid product (51 g). The melting point of the obtained polymer was 280-320°C, as determined by DSC analysis. No free OHPEP monomer was detected by analysis with LC-MS.

### Example 4 (Reference Example - PEK)

In a three-necked flask, fitted with Dean-Stark trap, condenser, mechanical stirrer and nitrogen inlet, 4,4'-difluorobenzophenone (7,9 g; 36 mmol), 4,4'-dihydroxybenzophenone (8,0g; 37 mmol) and K2CO3 (8,1g, 56 mmol) were dissolved in a mixture of 115 g sulfolane and 210 mL toluene. The entire operation was conducted in a nitrogen atmosphere with continuous stirring. The mixture was heated to 120 °C and maintained under reflux for about 3 hours and the generated water was continuously removed from the reaction mixture by azeotropic distillation. After the water was removed the temperature was maintained at 120-130 °C for about 1 hour and toluene was distilled off at the same time. Then, the reaction was maintained at 133 °C for 4 hours. The reaction mixture was cooled to room temperature and the PEK was obtained by precipitating from acidic water. The polymer was washed with methanol and water and dried for 24 hours at 60 °C. GC analysis showed less than 1 wt% monomers in the product. The melting point was 180-300°C as determined by DSC analysis.

### Example 5 (Reference Example - PEEK)

4,4-difluorobenzophenone (82.5 g, 0.38 mol) hydroquinone (41.8 g, 0.38 mol) potassium carbonate, (78.8 g, 0.57 mol), sulfolane (400 mL) and toluene (800 mL) were mixed in a 2L glass reactor equipped with dean-stark and heated to reflux over nitrogen. Water was continuously removed during 4 hours and then toluene was distilled off the temperature was increased from 119°C to 181°C. The reaction mixture was cooled down to room temperature and HCl (1000 mL, 0.5 M) was added until the pH reached 3. The solid material was filtered off, washed three times with water (900 mL) and dried in an oven at 105°C for 24 hours to give a PEEK as a brown solid product (109 g). The melting point was 300-350°C as determined by DSC analysis.

The melting points of the obtained polymers were determined DSC measurements, while the curing temperature was determined by Melt Rheology tests (except for example 2, for which the curing temperature was determined with Modulated DSC). In Table 1, values for the polymers in example 1 to 5 are given.

**Table 1.**

| **Sample** | **Mp (°C)** | **Curing On-set (°C)** | **Observations** |
|---|---|---|---|
| Ex 1 | 345 | 445 | Melt rheology |
| Ex 2 | 325 | 306 | Low cure (before melting) |
| | | | Measured by Modulated DSC |
| Ex 3 | 300 | 375 | Melt Rheology |
| Ex 4 (PEK) | 300 | - | No cure |
| Ex 5 (PEEK) | 325 | - | No-cure |

### DSC measurements

Instrument: TA-Instruments DSC Q2000. Sample amount: 2-10 mg.
1) Method Standard DSC:
   a. Equilibrate at 40°C
   b. Ramp 20°C/min to 500°C.
2) Method Modulated DSC (example 2):
   a. Equilibrate at 35.00°C
   b. Modulate +/- 1.00°C every 60 seconds
   c. Isothermal for 5.00 min
   d. Ramp 3.00°C/min to 525.00°C

### Melt Rheology tests

Instrument: ARES G2 rheometer with FCO temperature control system Geometry:
Upper: 25mm disposable parallel plate with the heat block baffle
Lower: 40mm disposable parallel plate with the heat block baffle

### Test procedure:

Flow temperature step test:
Temperature: from 320°C or 340°C to 500°C, Step: 5 °C/step, Shear rate: 10 1/s

The test geometry was pre-heated to the starting temperature before loading the sample. Zero gap was performed at the starting test temperature.

The solvent uptake after 14 hour storage at room temperature without agitation for polymer of example 2 after cross-linking and example 5 (PEEK) were compared by using dimethylformamide (DMF) and toluene. PEEK did uptake 57% and 50% more solvent than the cross-linked polymer, respectively. Hence, the cross-linking significantly increases the solvent resistance of the polymer.

## Claims

1. A cross-linkable aromatic polyetherketone comprising at least two residues, each comprising one carbon-carbon triple bond wherein
one of said two residues is present in said polyetherketone as a pendant group or as a residue, wherein the carbon-carbon triple bond is part of the polymer chain;
the other one of said two residues is present in said polyetherketone as an end-capping group;
said cross-linkable aromatic polyetherketone is obtainable by co-polymerizating at least two aromatic monomers, giving rise to an ether bond and/or ketone linkage upon polymerization, and at least two acetylenic compounds, or by subjecting at least one aromatic polyetherketone to react with at least two acetylenic compounds; and
said two acetylenic compounds are independently selected from compounds according to formula II 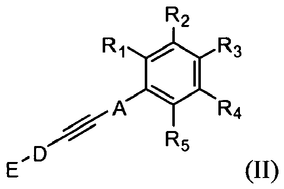 wherein
R1 and R5 are independently selected from the group consisting of hydrogen, halogen, hydroxy, acyl halide, nitro, C1-C4 alkyl, CF3 and a residue according to formula (III);
R2 to R4 are independently selected from the group consisting of hydrogen, halogen, hydroxy, acyl halide, nitro and a residue according to formula (III);
"A" is a direct bond, an electron donating, linking group, such as methylene, or an ether (-O-) bond, or an electron withdrawing, linking group, such as a carbonyl linkage (-C(O)-);
"D" is a direct bond, an electron donating, linking group, such as methylene, or an ether (-O-) bond, or an electron withdrawing, linking group, such as a carbonyl linkage (-C(O)-);
"E" is selected from the group consisting of hydrogen, C1-4 alkyl, and a residue according to formula (IV);
Formula (III) is a residue as depicted below 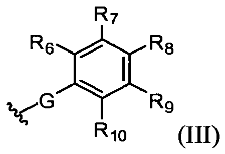 wherein
R6 to R10 are independently selected from the group consisting of hydrogen, halogen, hydroxy, nitro, and acyl halide,;
"G" is a direct bond, an electron donating, linking group, such as methylene, or an ether (-O-) bond, or an electron withdrawing, linking group, such as a carbonyl linkage (-C(O)-); and
the waved line indicates the point of attachment;
Formula (IV) is a residue as depicted below 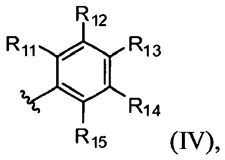 wherein
R11 and R15 are independently selected from the group consisting of hydrogen, halogen, hydroxy, acyl halide, nitro, C1-C4 alkyl, CF3 and a residue according to formula (V);
R12 to R14 are independently selected from the group consisting of hydrogen, halogen, hydroxy, acyl halide, nitro, and a residue according to formula (V); and
the waved line indicates the point of attachment;
Formula (V) is a residue as depicted below 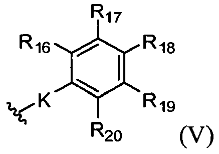 wherein
R16 to R20 are independently selected from the group consisting of hydrogen, halogen, hydroxy, nitro, and acyl halide;
"K" is a direct bond, an electron donating, linking group, such as methylene, or an ether (-O-) bond, or an electron withdrawing, linking group, such as a carbonyl linkage (-C(O)-); and
the waved line indicates the point of attachment.

2. The cross-linkable aromatic polyetherketone according to claim 1, wherein said aromatic monomers are selected from the group consisting of 4,4'-difluorobenzophenone, 4,4'-dihydroxybenzophenone, hydroquinone, resorcinol, diphenylether, 1,4-diphenoxybenzene, 1,3-diphenoxybenzene, terephthalolyl chloride, isophthalolyl chloride, or derivatives and analogues thereof.

3. The cross-linkable aromatic polyetherketone according to any of the preceding claims, wherein said cross-linkable aromatic polyetherketone comprises at least 10 repeating units.

4. The cross-linkable aromatic polyetherketone according to any of the preceding claims, wherein said polyetherketone is selected from the group consisting of aromatic poly ether ketone (PEK), aromatic poly ether ether ketone (PEEK), aromatic poly ether ketone ketone (PEKK), and poly ether ketone ether ketone ketone (PEKEKK), and wherein said polyetherketone comprises at least two residues, each comprising at least one carbon-carbon triple bond.

5. The cross-linkable aromatic polyetherketone according to any of the claims 1 and 4, wherein "E" is a residue according to formula (IV), wherein R11 and R15 are hydrogen, and "D" is a direct bond.

6. The cross-linkable aromatic polyetherketone according to any of the claims 1 to 5, wherein at R6, R10, R11, R15, R16 and R20, if present, are hydrogen.

7. The cross-linkable aromatic polyetherketone according to any of the claims 1 to 6, wherein "A", "D", "G", and "K", are independently selected from the group consisting of a direct bond, an ether bond (-O-) and a carbonyl linkage (-C(O)-).

8. The cross-linkable aromatic polyetherketone according to any of the claims 1 to 8, wherein at least one of R1 to R5, or R6 to R20, if present, is fluorine.

9. The cross-linkable aromatic polyetherketone according to any of the claims 1 to 8, wherein at least one of R1 to R5 is a residue according to formula (III), at least one of R6 to R10 is halogen, and "G" is a carbonyl linkage (-C(O)-).

10. The cross-linkable aromatic polyetherketone according to any of the claims 1 to 9, wherein "E" is a residue according to formula (IV), at least one of R11 to R15 is a residue according to formula (V), at least one of R16 to R20 is halogen, and "K" is a carbonyl linkage (-C(O)-).

11. The cross-linkable aromatic polyetherketone according to any of the claims 1 to 10, wherein R1, R3, and R5 are hydrogen, and R2 and R4 are distinct from hydrogen.

12. The cross-linkable aromatic polyetherketone according to claim 1 to 10, wherein R1 and R5 are hydrogen, one of R2 to R4 is selected from the group consisting of fluorine and a residue according to formula (III), and the other two of R2 to R4 are hydrogen.

13. The cross-linkable aromatic polyetherketone according to claim 1, wherein the compound is selected from the group consisting of:

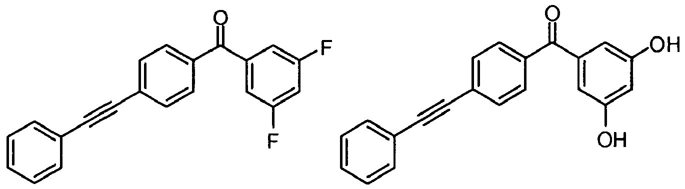

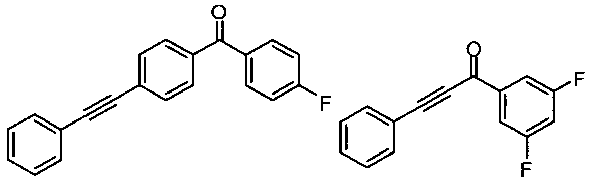

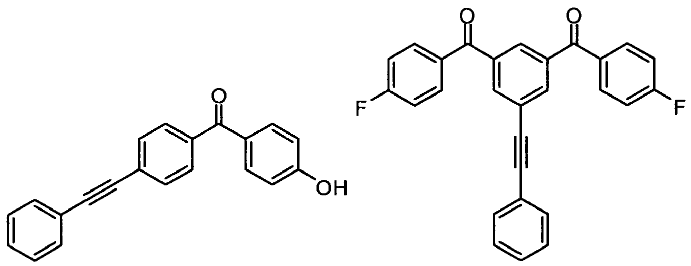

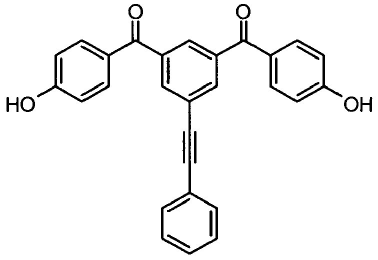

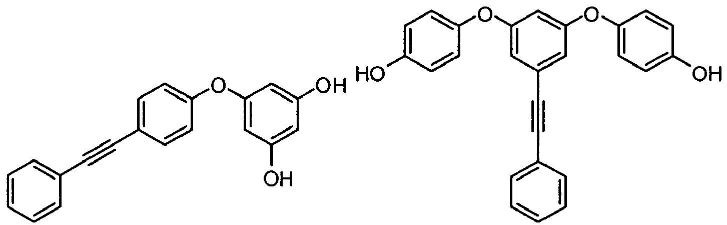

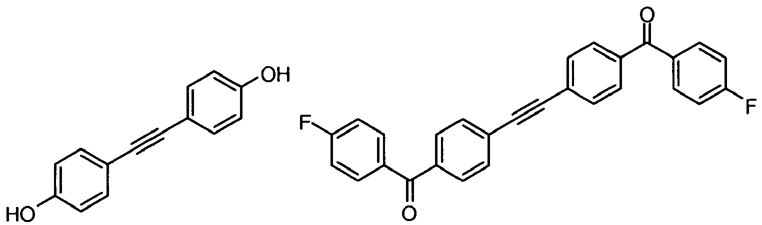

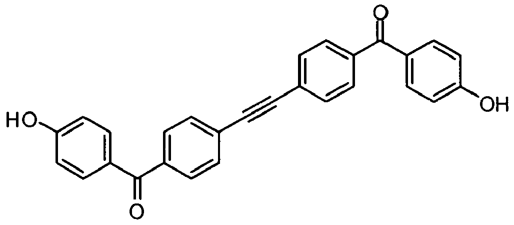

14. The cross-linkable aromatic polyetherketone according to any of the claims 1 to 13, wherein said acetylenic residue is present in said cross-linkable aromatic polyetherketone in an amount corresponding to between 0.5 and 40 mole% of total molar amount of aromatic monomers and acetylenic compounds used to obtain said acetylenic aromatic polyether.

15. A composition comprising at least one cross-linkable aromatic polyetherketone according to any of the claims 1 to 14, wherein said composition comprises between 0.1 and 99.9 wt% of said cross-linkable aromatic polyetherketone, at least one additional polymer, and/or at least one filler, reinforcement, pigment, plasticiser and/or any other additive.

## Patentansprüche

1. Quervernetzbares aromatisches Polyetherketon, umfassend mindestens zwei Reste, jeder umfassend eine Kohlenstoff-Kohlenstoff-Dreifachbindung, wobei einer der zwei Reste in dem Polyetherketon als eine Seitengruppe oder als ein Rest vorhanden ist, wobei die Kohlenstoff-Kohlenstoff-Dreifachbindung Teil der Polymerkette ist;
der andere der zwei Reste in dem Polyetherketon als eine End-kappende Gruppe vorhanden ist;
das quervernetzbare aromatische Polyetherketon erhältlich ist durch Copolymerisieren mindestens zwei aromatischer Monomere, was zu einer Etherbindung und/oder Ketonverknüpfung nach Polymerisierung führt, und mindestens zwei acetylenischen Verbindungen, oder durch Unterziehen mindestens eines aromatischen Polyetherketons mit mindestens zwei acetylenischen Verbindungen zu reagieren; und
die zwei acetylenischen Verbindungen unabhängig ausgewählt sind aus Verbindungen gemäß der Formel II 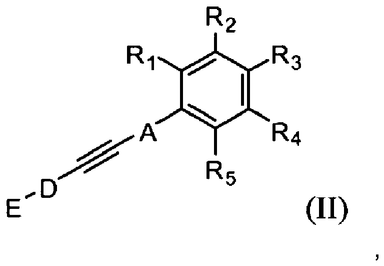 wobei
R1 und R5 unabhängig ausgewählt sind aus der Gruppe, bestehend aus Wasserstoff, Halogen, Hydroxy, Acylhalogenid, Nitro, C1-C4-Alkyl, CF3 und einem Rest gemäß Formel (III);
R2 bis R4 unabhängig ausgewählt sind aus der Gruppe, bestehend aus Wasserstoff, Halogen, Hydroxy, Acylhalogenid, Nitro und einem Rest gemäß Formel (III);
"A" eine direkte Bindung, eine Elektronen schiebende verknüpfende Gruppe ist wie Methylen oder eine Ether- (-O-) -bindung, oder eine Elektronen ziehende verknüpfende Gruppe wie eine Carbonylverknüpfung (-C(O)-);
"D" eine direkte Bindung, eine Elektronen schiebende verknüpfende Gruppe wie Methylen oder eine Ether- (-O-) -bindung, oder eine Elektronen ziehende verknüpfende Gruppe wie eine Carbonylverknüpfung (-C(O)-) ist;
"E" ausgewählt ist aus der Gruppe, bestehend aus Wasserstoff, C1-4-Alkyl und einem Rest gemäß Formel (IV);
Formel (III) ein wie nachstehend abgebildeter Rest ist 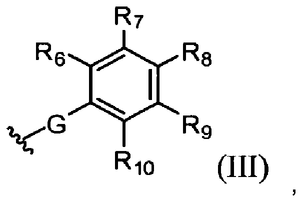 wobei
R6 bis R10 unabhängig ausgewählt sind aus der Gruppe, bestehend aus Wasserstoff, Halogen, Hydroxy, Nitro und Acylhalogenid;
"G" eine direkte Bindung, eine Elektronen schiebende verknüpfende Gruppe wie Methylen oder eine Ether- (-O-) -bindung, oder eine Elektronen ziehende verknüpfende Gruppe wie eine Carbonylverknüpfung (-C(O)-) ist; und
die gewellte Linie den Anbindungspunkt anzeigt;
Formel (IV) ein wie nachstehend abgebildeter Rest ist 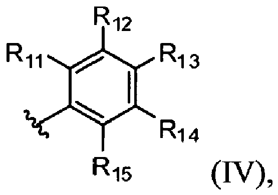 wobei
R11 und R15 unabhängig ausgewählt sind aus der Gruppe, bestehend aus Wasserstoff, Halogen, Hydroxy, Acylhalogenid, Nitro, C1-C4-Alkyl, CF3 und einem Rest gemäß Formel (V);
R12 bis R14 unabhängig ausgewählt sind aus der Gruppe, bestehend aus Wasserstoff, Halogen, Hydroxy, Acylhalogenid, Nitro und einem Rest gemäß Formel (V); und
die gewellte Linie den Anbindungspunkt anzeigt;
Formel (V) ein wie nachstehend abgebildeter Rest ist 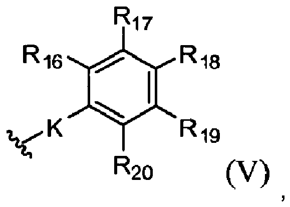 wobei
R16 bis R20 unabhängig ausgewählt sind aus der Gruppe, bestehend aus Wasserstoff, Halogen, Hydroxy, Nitro und einem Acylhalogenid;
"K" eine direkte Bindung, eine Elektronen schiebende verknüpfende Gruppe wie Methylen oder eine Ether- (-O-) -bindung, oder eine Elektronen ziehende verknüpfende Gruppe wie eine Carbonylverknüpfung (-C(O)-) ist; und
die gewellte Linie den Anbindungspunkt anzeigt.

2. Quervernetzbares aromatisches Polyetherketon nach Anspruch 1, wobei die aromatischen Monomere ausgewählt sind aus der Gruppe, bestehend aus 4,4'-Difluorbenzophenon, 4,4'-Dihydroxybenzophenon, Hydrochinon, Resorzin, Diphenylether, 1,4-Diphenoxybenzol, 1,3-Diphenoxybenzol, Terephthaloylchlorid, Isophthalolylchlorid, oder Derivaten und Analoga davon.

3. Quervernetzbares aromatisches Polyetherketon nach einem beliebigen der vorhergehenden Ansprüche, wobei das quervernetzbare aromatische Polyetherketon mindestens zehn Wiederholungseinheiten umfasst.

4. Quervernetzbares aromatisches Polyetherketon nach einem beliebigen der vorhergehenden Ansprüche, wobei das Polyetherketon ausgewählt ist aus der Gruppe, bestehend aus aromatischem Polyetherketon (PEK), aromatischem Polyether-Etherketon (PEEK), aromatischem Polyether-Keton-Keton (PEKK) und Polyetherketon-Etherketon-Keton (PEKEKK), und wobei das Polyetherketon mindestens zwei Reste umfasst, die jeweils mindestens eine Kohlenstoff-Kohlenstoff-Dreifachbindung umfassen.

5. Quervernetzbares aromatisches Polyetherketon nach einem beliebigen der Ansprüche 1 und 4, wobei "E" ein Rest gemäß Formel (IV) ist, wobei R11 und R15 Wasserstoff sind und "D" eine direkte Bindung ist.

6. Quervernetzbares aromatisches Polyetherketon nach einem beliebigen der Ansprüche 1 bis 5, wobei an R6, R10, R11, R15, R16 und R20, falls vorhanden, Wasserstoff sind.

7. Quervernetzbares aromatisches Polyetherketon nach einem beliebigen der Ansprüche 1 bis 6, wobei "A", "D", "G" und "K" unabhängig ausgewählt sind aus der Gruppe, bestehend aus einer direkten Bindung, einer Etherbindung (-O-) und einer Carbonylverknüpfung (-C(O)-).

8. Quervernetzbares aromatisches Polyetherketon nach einem beliebigen der Ansprüche 1 bis 8, wobei mindestens einer von R1 bis R5, oder R6 bis R20, falls vorhanden, Fluor ist.

9. Quervernetzbares aromatisches Polyetherketon nach einem beliebigen der Ansprüche 1 bis 8, wobei mindestens einer von R1 bis R5 ein Rest gemäß Formel (III) ist, mindestens einer von R6 bis R10 Halogen ist und "G" eine Carbonylverknüpfung (-C(O)-) ist.

10. Quervernetzbares aromatisches Polyetherketon nach einem beliebigen der Ansprüche 1 bis 9, wobei "E" ein Rest gemäß Formel (IV) ist, mindestens einer von R11 bis R15 ein Rest gemäß Formel (V) ist, mindestens einer von R16 bis R20 Halogen ist und "K" eine Carbonylverknüpfung (-C(O)-) ist.

11. Quervernetzbares aromatisches Polyetherketon nach einem beliebigen der Ansprüche 1 bis 10, wobei R1, R3 und R5 Wasserstoff sind, und R2 und R4 sich von Wasserstoff unterscheiden.

12. Quervernetzbares aromatisches Polyetherketon nach Anspruch 1 bis 10, wobei R1 und R5 Wasserstoff sind, einer von R2 bis R4 ausgewählt ist aus der Gruppe bestehend aus Fluor und einem Rest gemäß Formel (III), und die anderen zwei von R2 bis R4 Wasserstoff sind.

13. Quervernetzbares aromatisches Polyetherketon nach Anspruch 1, wobei die Verbindung ausgewählt ist aus der Gruppe bestehend aus:

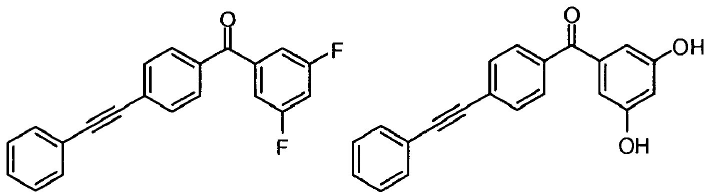

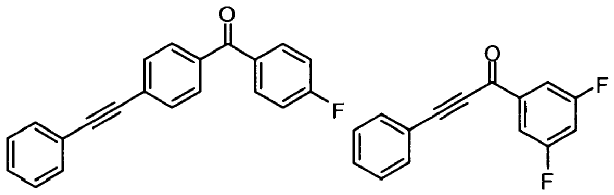

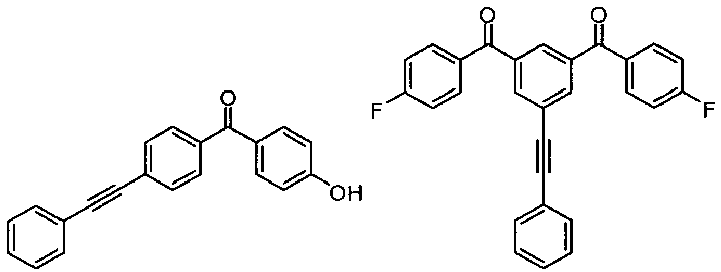

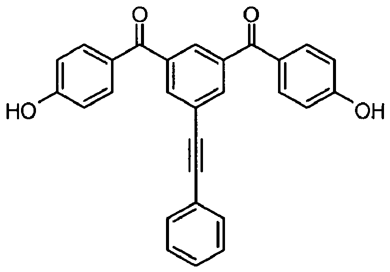

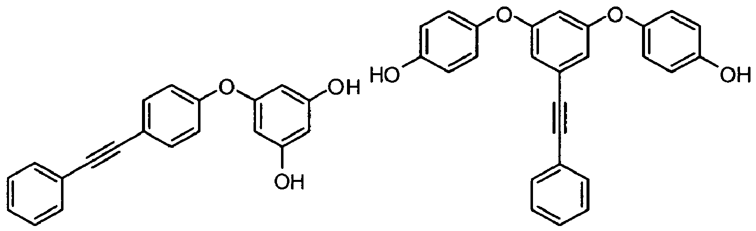

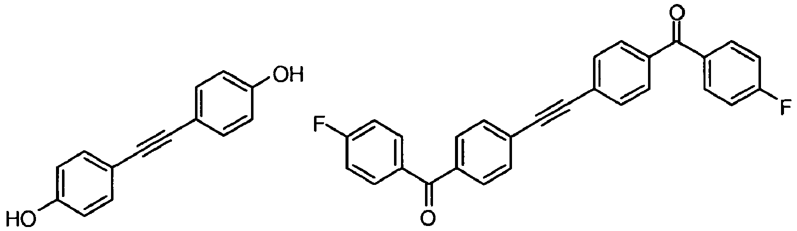

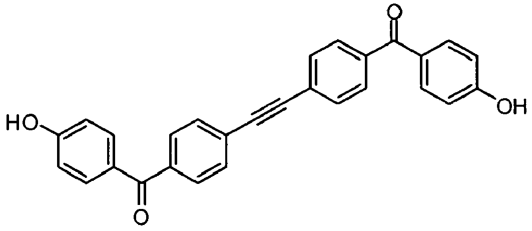

14. Quervernetzbares aromatisches Polyetherketon nach einem beliebigen der Ansprüche 1 bis 13, wobei der acetylenische Rest in dem quervernetzbaren aromatischen Polyetherketon in einer Menge vorhanden ist, entsprechend zwisehen 0,5 und 40 Mol-% der gesamten molaren Menge an aromatischen Monomeren und acetylenischen Verbindungen, die verwendet werden, den acetylenischen aromatischen Polyether zu erhalten.

15. Zusammensetzung, umfassend mindestens ein quervernetzbares aromatisches Polyetherketon gemäß einem beliebigen der Ansprüche 1 bis 14, wobei die Zusammensetzung zwischen 0,1 und 99,9 Gew.-% des quervernetzbaren aromatischen Polyetherketons, mindestens ein zusätzliches Polymer und/oder mindestens ein Füllmittel, eine Verstärkung, ein Pigment, einen Weichmacher und/oder irgendein anderes Additiv umfasst.

## Revendications

1. Polyéthercétone aromatique réticulable comprenant au moins deux résidus chacun comprenant une triple liaison carbone-carbone dans laquelle
l'un desdits deux résidus est présent dans ladite polyéthercétone comme un groupe latéral ou comme un résidu, dans lequel la triple liaison carbone-carbone fait partie de la chaîne polymère ;
l'autre desdits deux résidus est présent dans ladite polyéthercétone comme un groupe de coiffage d'extrémité ;
ladite polyéthercétone aromatique réticulable peut être obtenue par co-polymérisation d'au moins deux monomères aromatiques, donnant lieu à une liaison éther et/ou une liaison cétone lors de la polymérisation, et d'au moins deux composés acétyléniques, ou par soumission d'au moins une polyéthercétone aromatique à réagir avec au moins deux composés acétyléniques ; et
lesdits deux composés acétyléniques sont choisis indépendamment parmi les composés de formule II 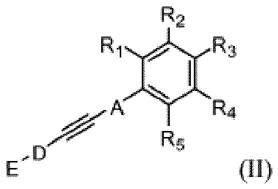 dans laquelle
R1 et R5 sont choisis indépendamment dans le groupe constitué par un hydrogène, halogène, hydroxy, halogénure d'acyle, nitro, alkyle en C1-C4, CF3 et un résidu de formule (III) ;
R2 à R4 sont choisis indépendamment dans le groupe constitué par un hydrogène, halogène hydroxy, halogénure d'acyle, nitro et un résidu de formule (III) ;
« A » est une liaison directe, un groupe de liaison, donneur d'électrons, tel que le méthylène, ou une liaison éther (-O-), ou un groupe de liaison, attracteur d'électrons, tel qu'une liaison carbonyle (-C(O)-) ;
« D » est une liaison directe, un groupe de liaison, donneur d'électrons, tel que le méthylène, ou une liaison éther (-O-), ou un groupe de liaison, attracteur d'électrons, tel qu'une liaison carbonyle (-C(O)-) ;
« E » est choisi dans le groupe constitué par un hydrogène, alkyle en C1-4, et un résidu de formule (IV) ;
La formule (III) est un résidu tel que représenté ci-dessous 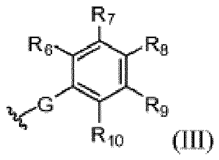 dans laquelle
R6 à R10 sont choisis indépendamment dans le groupe constitué par un hydrogène, halogène, hydroxy, nitro, et halogénure d'acyle ;
« G » est une liaison directe, un groupe de liaison, donneur d'électrons, tel que le méthylène, ou une liaison éther (-O-), ou un groupe de liaison, attracteur d'électrons, tel qu'une liaison carbonyle (-C(O)-) ; et
la ligne ondulée indique le point de fixation ;
La formule (IV) est un résidu tel que représenté ci-dessous 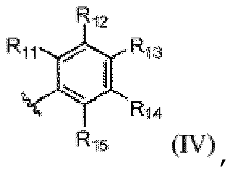 dans laquelle
R11 et R15 sont choisis indépendamment dans le groupe constitué par un hydrogène, halogène, hydroxy, halogénure d'acyle, nitro, alkyle en C1-C4, CF3 et un résidu de formule (V) ;
R12 à R14 sont choisis indépendamment dans le groupe constitué par un hydrogène, halogène, hydroxy, halogénure d'acyle, nitro, et un résidu de formule (V) ; et
la ligne ondulée indique le point de fixation ;
La formule (V) est un résidu tel que représenté ci-dessous 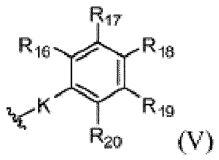 dans laquelle
R16 à R20 sont choisis indépendamment dans le groupe constitué par un hydrogène, halogène, hydroxy, nitro, et halogénure d'acyle ;
« K » est une liaison directe, un groupe de liaison, donneur d'électrons, tel que le méthylène, ou une liaison éther (-O-), ou un groupe de liaison, attracteur d'électrons, tel qu'une liaison carbonyle (-C(O)-) ; et
la ligne ondulée indique le point de fixation.

2. Polyéthercétone aromatique réticulable selon la revendication 1, dans laquelle lesdits monomères aromatiques sont choisis dans le groupe constitué par la 4,4'-difluorobenzophénone, la 4,4'-dihydroxybenzophénone, l'hydroquinone, le résorcinol, l'éther de diphényle, le 1,4-diphénoxybenzène, le 1,3-diphénoxybenzène, le chlorure de téréphthalolyle, le chlorure d'isophthalolyle, ou les dérivés et analogues de ceux-ci.

3. Polyéthercétone aromatique réticulable selon l'une quelconque des revendications précédentes, dans laquelle ladite polyéthercétone aromatique réticulable comprend au moins 10 motifs répétitifs.

4. Polyéthercétone aromatique réticulable selon l'une quelconque des revendications précédentes, dans laquelle ladite polyéthercétone est choisie dans le groupe constitué par une poly éther cétone (PEK) aromatique, une poly éther éther cétone (PEEK) aromatique, une poly éther cétone cétone (PEKK) aromatique, et une poly éther cétone éther cétone cétone (PEKEKK), et dans laquelle ladite polyéthercétone contient au moins deux résidus, chacun comprenant au moins une triple liaison carbone-carbone.

5. Polyéthercétone aromatique réticulable selon l'une quelconque des revendications 1 et 4, dans laquelle « E » est un résidu de formule (IV), dans laquelle R11 et R15 sont un hydrogène, et « D » est une liaison directe.

6. Polyéthercétone aromatique réticulable selon l'une quelconque des revendications 1 à 5, dans laquelle à R6, R10, R11, R15, R16 et R20, s'ils sont présents, sont un hydrogène.

7. Polyéthercétone aromatique réticulable selon l'une quelconque des revendications 1 à 6, dans laquelle « A », « D », « G », et « K », sont choisis indépendamment dans le groupe constitué par une liaison directe, une liaison éther (-O-) et une liaison carbonyle (-C(O)-).

8. Polyéthercétone aromatique réticulable selon l'une quelconque des revendications 1 à 8, dans laquelle au moins l'un de R1 à R5, ou R6 à R20, s'il est présent, est un fluor.

9. Polyéthercétone aromatique réticulable selon l'une quelconque des revendications 1 à 8, dans laquelle au moins l'un de R1 à R5 est un résidu de formule (III), au moins l'un de R6 à R10 est un halogène, et « G » est une liaison carbonyle (-C(O)-).

10. Polyéthercétone aromatique réticulable selon l'une quelconque des revendications 1 à 9, dans laquelle « E » est un résidu de formule (IV), au moins l'un de R11 à R15 est un résidu de formule (V), au moins l'un de R16 à R20 est un halogène, et « K » est une liaison carbonyle (-CO)-).

11. Polyéthercétone aromatique réticulable selon l'une quelconque des revendications 1 à 10, dans laquelle R1, R3, et R5 sont un hydrogène, et R2 et R4 sont différents de l'hydrogène.

12. Polyéthercétone aromatique réticulable selon l'une quelconque des revendications 1 à 10, dans laquelle R1 et R5 sont un hydrogène, l'un de R2 à R4 est choisi dans le groupe constitué par un fluor et un résidu de formule (III), et les deux autres de R2 à R4 sont un hydrogène.

13. Polyéthercétone aromatique réticulable selon la revendication 1, dans laquelle le composé est choisi dans le groupe constitué par :

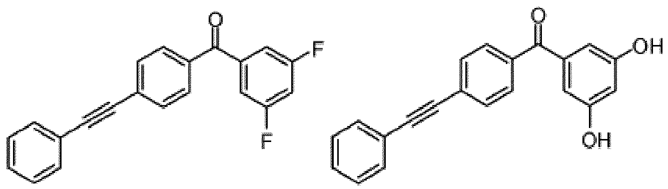

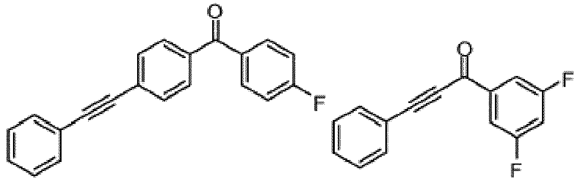

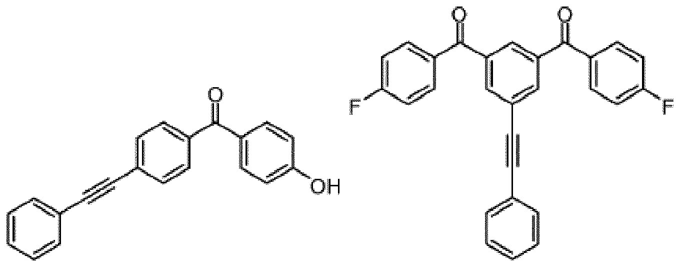

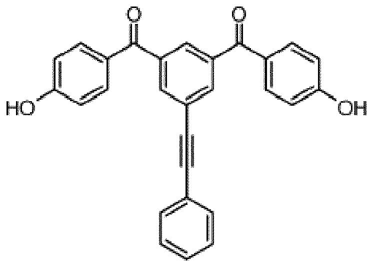

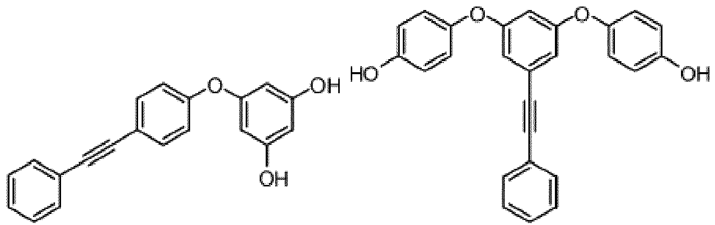

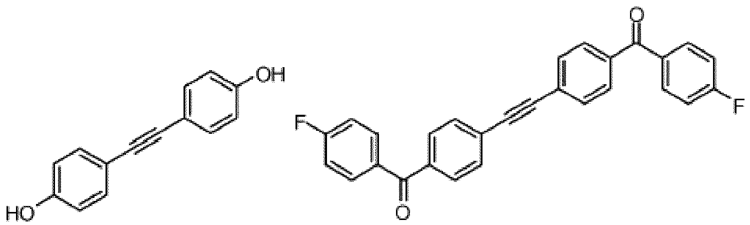

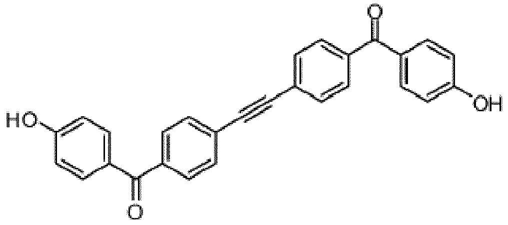

14. Polyéthercétone aromatique réticulable selon l'une quelconque des revendications 1 à 13, dans laquelle ledit résidu acétylénique est présent dans ladite polyéthercétone aromatique réticulable dans une quantité correspondant à entre 0,5 et 40 % molaire de la quantité molaire totale des monomères aromatiques et des composés acétyléniques utilisés pour obtenir ledit polyéther aromatique acétylénique.

15. Composition comprenant au moins une polyéthercétone aromatique réticulable selon l'une quelconque des revendications 1 à 14, dans laquelle ladite composition comprend entre 0,1 et 99,9 % en poids de ladite polyéthercétone aromatique réticulable, au moins un polymère supplémentaire, et/ou au moins une charge, un agent de renforcement, un pigment, un plastifiant et/ou tout autre additif.
